# EUROPEAN PATENT APPLICATION

(11) **EP 1 130 597 A1**
(43) Date of publication of application: **05.09.2001**
(21) Application number: 00948259.7
(22) Date of filing: 27.07.2000
(51) Int. Cl.: G11B 27/10, G11B 27/00, G06F 17/30, G06K 17/00, G06F 12/00, G06F 3/08

(54) **INFORMATION PROCESSING METHOD, INFORMATION PROCESSING DEVICE, AND MEDIUM**

(30) Priority: 27.07.1999 JP 21285399; 03.12.1999 JP 34535599
(71) Applicant: Sony Corporation, Tokyo 141-0001 (JP)
(72) Inventor: IGARASHI, Tatsuya Sony Corporation, Tokyo 141-0001 (JP)
(74) Representative: Robinson, Nigel Alexander Julian
(86) International application number: JP0005033
(87) International publication number: WO0108158

(57) **Abstract**

In order to facilitate the retrieval of information recorded on a recording media loaded on a recording and reproducing apparatus provided independently of a control device, when information obtained from a recording and reproducing apparatus on which a predetermined recording media can be loaded is managed by a predetermined control device connected through a predetermined digital interface, there is provided a media identification number which manages a recording media. If a media identification number designated by the control device and a media identification number managed by the recording media recording and reproducing apparatus do not agree with each other, then it is judged that a recording media has been changed, and the control device side can cope with the case in which the recording media has been changed. Moreover, a file recorded on the recording media can easily be recognized based on an identification number of the file.

## Description

### TECHNICAL FIELD

The present invention relates to information processing apparatus and method and a medium, and particularly to information processing apparatus and method and a medium in which information managed by a plurality of hierarchical layers can be retrieved with ease.

### BACKGROUND ART

Recently, IEEE (Institute of Electrical and Electronic Engineers) 1394 high-performance bus (hereinafter simply referred to as 1394 bus if necessary) has come into wide use. A number of electronic devices (nodes) may be interconnected to the 1394 bus so that they become able to transmit and receive information with each other. For example, a digital still camera and a personal computer are connected to the 1394 bus, whereby an image that was shot by and stored in the digital electronic still camera can be retrieved by the personal computer and outputted to and displayed on a monitor.

Digital electronic still cameras are able to take a large number of pictures. In addition, they can reduce the size of those pictures to generate thumb-nail pictures for retrieval use and can store therein such thumb-nail pictures as files. Furthermore, digital electronic still cameras are able to input and store not only audio data accompanying such pictures but also text data writing a note about the situations under which those pictures were taken as files.

As a consequence, since digital electronic still cameras have to manage a large number of files, there is an increasing demand for realizing a file management method capable of retrieving a desired file from a large number of files with ease.

Also, digital electronic still cameras have a detachable recording media to record thereon image data thus shot. When a personal computer interconnected to a digital still camera manages data recorded on the recording media attached to the camera, if a recording media is replaced with other recording media during data are managed, there is then the problem that such management state will be disordered. Heretofore, it has been difficult for personal computers to judge whether or not a recording media is replaced with other recording media.

While the problems encountered by the electronic still cameras have been described so far, similar problems arise when a recording and reproducing apparatus using other recording media is interconnected to other control devices such as a computer apparatus to thereby manage recording data.

### THE DISCLOSURE OF THE INVENTION

In view of the aforesaid aspect, it is an object of the present invention to realize a system in which retrieval can be facilitated.

According to the first invention, there is provided an information processing method in which information obtained from a recording and reproducing apparatus on which a predetermined recording media can be loaded is managed by a predetermined control device. This information processing method includes a media identification number for managing the above-mentioned recording media and in which if a media identification number designated by the above-mentioned control device and a media identification number managed by the recording and reproducing apparatus for the above-mentioned recording media do not agree with each other, then it is determined that a recording media has been changed.

With the above arrangement, the control device side becomes able to correctly recognize a recording media by using an identification number. In particular, if the identification number managed by the recording and reproducing apparatus side and the identification number managed by the control device side do not agree with each other, it is to be understood that the recording media has been changed.
Thus, the control device side becomes able to cope with the change of the recording media.

According to the second invention, in the information processing method according to the first invention, it is determined by the above-mentioned recording and reproducing apparatus whether or not the media identification number set on the above-mentioned control device and the media identification number counted by the above-mentioned recording and reproducing apparatus agree with each other. If they do not agree with each other, then the above-mentioned control device is informed of the fact that the recording media has been changed.

With the above arrangement, it becomes possible for the control device side to determine based on the judgment made on the recording and reproducing apparatus side whether or not the recording media has been changed.

According to the third invention, in an information processing method for supplying a file recorded on a predetermined recording media to a control device connected through a predetermined digital interface, an identification number of the file recorded on the above-mentioned recording media is generated by the above-mentioned recording media recording and reproducing apparatus and the identification number thus generated is informed to the above-mentioned control device so that the above-mentioned control device may recognize the file.

With the above arrangement, it becomes possible for the control device side to correctly recognize the file recorded on the recording media by using the identification number.

According to the fourth invention, in the information processing method according to the third invention, the file recorded on the above-mentioned recording media is managed by a plurality of tree structured hierarchical layers, the number of information is obtained at every layer of the above-mentioned information and guide information on each information is obtained without following the tree structure in order for the above-mentioned management device to retrieve or access the above-mentioned managed information, a file of a low-order layer is judged based on the guide information thus obtained, and information of the file is obtained by a command which designates the judged file.

With the above arrangement, when information managed by a plurality of layers having the tree structure recorded on the recording media is obtained, information of a desired file can be obtained without following the tree structure, and it becomes possible to easily and reliably retrieve and obtain desired information from a lot of information.

According to the fifth invention, in the information processing method according to the fourth invention, by matching a file name of the file in the above-mentioned low-order layer with a name of a directory in a high-order layer of the file, the file in the low-order layer can be judged from the directory.

With the above arrangement, it becomes possible to judge the file of the low-order layer by reading out the directory.

According to the sixth invention, in the information processing method according to the fourth invention, when information can be read out from the high-order layer, predetermined information can be read out from a low-order layer connected to the above-mentioned information and a closing processing is carried out in such a manner that information is inhibited from being read out from the above-mentioned high-order layer by predetermined commands.

With the above arrangement, the processing for opening and closing information at every information of each layer need not be executed individually, and it becomes possible to rapidly read out information from a desired file.

According to the seventh invention, there is provided an information processing apparatus for managing information concerning a recording media loaded on a recording and reproducing apparatus connected through a predetermined digital interface. This information processing apparatus is comprised of media identification number setting means for managing the above-mentioned recording media and control means for recognizing, based on the result of comparing a media identification number set by the above-mentioned media identification number setting means with a media identification number set on the above-mentioned recording and reproducing apparatus, that the recording media has been changed.

With the above arrangement, it becomes possible to correctly recognize a recording media loaded on the recording and reproducing apparatus by using identification numbers. In particular, the information processing apparatus can reliably recognize the fact that the recording media has been changed on the recording and reproducing apparatus, and hence the information processing apparatus can reliably cope with the case in which the recording media has been changed on the recording and reproducing apparatus.

According to the eighth invention, in the information processing apparatus according to the seventh invention, the above-mentioned recording and reproducing apparatus is made to execute comparison of media identification numbers by the control of the above-mentioned control means and informs the information processing apparatus of compared results.

With the above arrangement, the information processing apparatus becomes able to easily determine whether or not the recording media has been changed by merely judging the informed results.

According to the ninth invention, there is provided an information processing apparatus for managing information on a file recorded on a recording media loaded on a recording and reproducing apparatus connected through a predetermined digital interface. This information processing apparatus is comprised of identification number acquiring means for acquiring an identification number of a file recorded on the above-mentioned recording media and control means for recognizing the file recorded on the above-mentioned recording media based on the identification number acquired by the above-mentioned identification number acquiring means.

With the above arrangement, it becomes possible for the information processing apparatus to correctly recognize a file recorded on a recording media loaded on the recording and reproducing apparatus by using an identification number.

According to the tenth invention, the information processing apparatus according to the ninth invention is comprised of a plurality of tree structured hierarchical layers to manage a file recorded on the above-mentioned recording media, first information acquiring means for acquiring the number of information obtained at every above-mentioned layer and guide information on each information and second information acquiring means for judging a file at a low-order layer based on guide information acquired by the above-mentioned first information acquiring means and acquiring information of a corresponding file from the above-mentioned managed information by a predetermined command when the judged file is designated.

With the above arrangement, when the information processing apparatus obtains information managed by a plurality of tree structured hierarchical layers recorded on a recording media, the information processing apparatus can obtain information from a desired file without following the tree structure and becomes possible to easily and reliably retrieve and obtain desired information from a lot of information.

According to the eleventh invention, in the information processing apparatus according to the tenth invention, the above-mentioned first information acquiring means judges a file in a low-order layer from a directory at a high-order layer of the above file.

With the above arrangement, the information processing apparatus side becomes able to judge the file in the low-order layer by reading out the directory.

According to the twelfth invention, in the information processing apparatus according to the tenth invention, when information can be read out from the high-order layer, the above-mentioned first information acquiring means supplies a predetermined command to the information processing apparatus in such a manner that predetermined information can be read out from a low-order layer connected to the above information and that a closing processing is executed so as to inhibit information from being read out from the above-mentioned high-order layer.

With the above arrangement, the information processing apparatus side need not carry out a processing for opening or closing information at every information in each layer separately. Hence, the information processing apparatus side becomes able to rapidly read out information from a desired file.

According to the thirteenth invention, there is provided a medium in which there is stored a program for managing information obtained by a recording and reproducing apparatus on which a predetermined recording media can be loaded. An information processing apparatus executes a program comprising the steps of:
a step of setting a media identification number for managing the above-mentioned recording media, a step of determining whether or not a set media identification number and a media identification number obtained from the above-mentioned recording and reproducing apparatus agree with each other and a step of determining that a recording media has been changed if it is determined by the above-mentioned decision that the media identification numbers do not agree with each other.

With the above arrangement, according to the information processing apparatus in which this program is implemented, it becomes possible to correctly recognize a recording media loaded on a recording and reproducing apparatus by using an identification number. In particular, the information processing apparatus can reliably understand that the recording media has been changed on the recording and reproducing apparatus and can reliably cope with the case in which the recording media has been changed on the recording and reproducing apparatus.

### BRIEF DESCRIPTION OF DRAWING

FIG. 1 is a block diagram showing an example of a bus system to which the present invention is applied.

FIG. 2 is a block diagram showing an example of a personal computer 4 shown in FIG. 1.

FIG. 3 is a diagram for explaining an example of managing files of a camera storage unit 12 in FIG. 1.

FIG. 4 is an explanatory diagram showing an example of a descriptor of an object path reference.

FIG. 5 is an explanatory diagram showing examples of a control command and a response.

FIG. 6 is an explanatory diagram showing an example of a storage information entry.

FIG. 7 is an explanatory diagram showing an example of storage type data.

FIG. 8 is an explanatory diagram showing examples of media type.

FIG. 9 is an explanatory diagram showing an example of recordable information.

FIG. 10 is an explanatory diagram showing an example of a storage unit reference.

FIG. 11 is an explanatory diagram showing examples of a control command and a response.

FIG. 12 is an explanatory diagram showing an example of an object information entry.

FIG. 13 is an explanatory diagram showing an example of an object information type.

FIG. 14 is a flowchart showing an example of processing for reading data on a specific file.

FIG. 15 is a flowchart showing an example of handle processing.

FIG. 16 is an explanatory diagram showing an example of a file ID.

FIG. 17 is an explanatory diagram showing an example of a path reference.

FIG. 18 is an explanatory diagram showing an example of a path component.

FIG. 19 is an explanatory diagram showing an example of context ID.

FIG. 20 is an explanatory diagram showing an example of command.

FIG. 21 is a flowchart showing processing for obtaining data recorded on a media.

FIG. 22 is an explanatory diagram showing an example of a get storage info command.

FIG. 23 is an explanatory diagram showing an example of a get volume info command.

FIG. 24 is an explanatory diagram showing an example of volume info data.

FIG. 25 is an explanatory diagram showing an example of a get number file.

FIG. 26 is an explanatory diagram showing an example of a get directory entry.

FIG. 27 is an explanatory diagram showing an example of directory entry data.

FIG. 28 is an explanatory diagram showing an example of a file tribute.

FIG. 29 is an explanatory diagram showing an example of get file info data.

FIG. 30 is an explanatory diagram showing an example of processing using media context ID.

FIG. 31 is an explanatory diagram showing an example of processing using contents context ID.

FIG. 32 is a flowchart showing an example of processing executed on the target device.

FIG. 33 is a flowchart showing an example of processing for updating context ID.

FIG. 34 is a flowchart showing an example of processing executed on the controller device.

FIG. 35 is an explanatory diagram showing an example of a frame structure prescribed by the IEEE 1394 system.

FIG. 36 is an explanatory diagram showing an example of a structure of an address space of a CSR architecture.

FIG. 37 is an explanatory diagram showing examples of positions, names and operations of major CSRs.

FIG. 38 is an explanatory diagram showing examples of arrangements of plug control registers.

FIG. 39 is an explanatory diagram showing examples of arrangements of oMPR, oPCR, iMPR, iPCR.

FIG. 40 is an explanatory diagram showing an example of a relationship among plugs, plug control registers and transmission channels.

FIG. 41 is an explanatory diagram showing an example of a data structure based on a hierarchical structure of a descriptor.

FIG. 42 is an explanatory diagram showing an example of a data structure of a descriptor.

FIG. 43 is an explanatory diagram showing an example of the generation ID of FIG. 42.

FIG. 44 is an explanatory diagram showing an example of the list ID of FIG. 42.

FIG. 45 is an explanatory diagram showing an example of a stack model of an AV/C command.

FIG. 46 is an explanatory diagram showing an example of a relationship between a command and a response of an AV/C command.

FIG. 47 is an explanatory diagram showing an example of a relationship between a command and a response of an AV/C command more in detail.

FIG. 48 is an explanatory diagram showing an example of a data structure of an AV/C command.

FIG. 49 is an explanatory diagram showing a concrete example of an AV/C command.

FIG. 50 is an explanatory diagram showing concrete examples of commands and responses of an AV/C command.

### BEST MODE FOR CARRYING OUT THE INVENTION

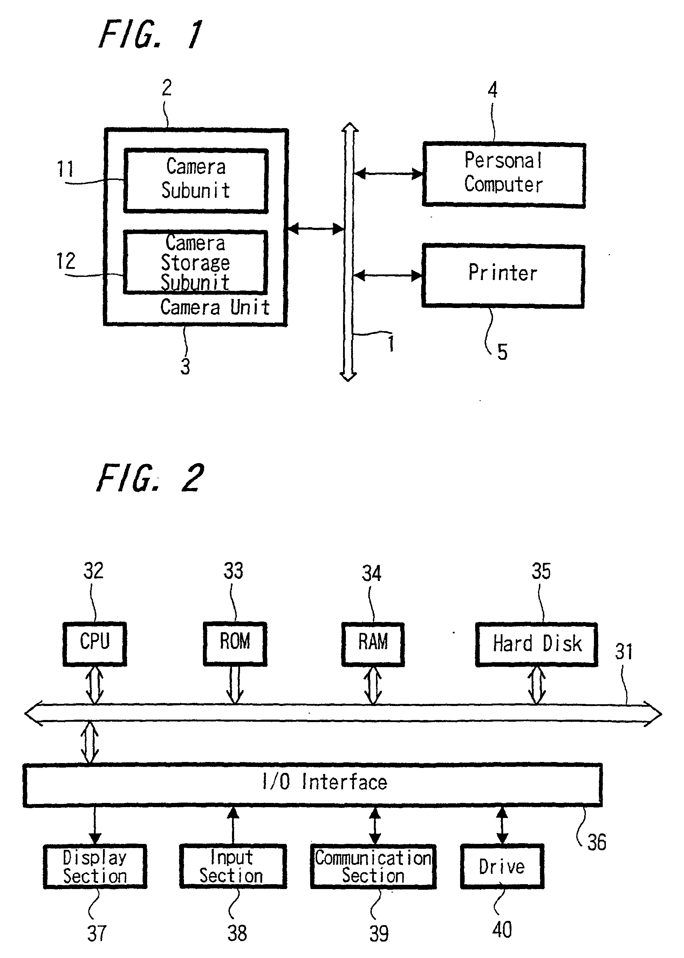

A first mode for carrying out the invention will be described below with reference to the drawings. FIG. 1 shows an example of a bus system to which the present invention is applied. A digital electronic still camera 2 may be connected through an IEEE 1394 high-performance serial bus 1 to a personal computer 4 and a printer 5. The digital electronic still camera 2 may include a camera unit 3 as a functional block on the 1394 bus. The camera unit 3 may include a camera subunit 11 capable of executing a function to shoot a camera subject and a camera storage subunit 12 capable of storing therein image data shot by the camera subunit 11.

The personal computer 4 may incorporate a CPU (Central Processing Unit) 32 as shown in FIG. 2, for example. The CPU 32 is able to execute programs stored in a ROM (Read Only Memory) 33 or a hard disk 35. A RAM (Random Access Memory) 34 may properly store therein programs and data that should be executed by the CPU 32.

An I/O interface 36 may be connected through the bus 31 to the CPU 32. The I/O interface 36 may have connected thereto a display section 37 comprised of suitable means such as an LCD (Liquid Crystal Display) or a CRT (Cathode Ray Tube), an input section 38 comprised of suitable means such as a keyboard and a mouse, a communication section 39 comprised of suitable means such as a modem for communicating with the digital electronic still camera 2 or the printer 5 through the 1394 bus 1 and a drive 40 capable of driving a magnetic disc, an optical disc or a magneto-optical disc set thereon.

The camera subunit 11 may transfer to the camera storage subunit 12 image data obtained when it takes a picture of a camera subject in response to a command issued from a user. The camera subunit 11 may also transfer to the camera storage subunit 12 audio data and text data obtained when a user inputs an audio signal from a microphone (not shown) and inputs characters and symbols from a tablet (not shown) as the user takes a picture of a camera subject.

The camera storage subunit 12 may compress inputted image data on one still picture and store the same with a predetermined ID (identification code) in its incorporated memory (not shown) as a file (image file). At the same time, the camera storage subunit 12 may reduce the size of such a picture to generate a thumb-nail picture and store the thus generated thumb-nail picture with a predetermined ID in its incorporated memory as one file (thumb-nail file). Also, when audio data or text data is inputted thereinto, the camera storage subunit 12 may store the audio data or the text data with a predetermined ID in the incorporated memory as one file (audio file or text file).

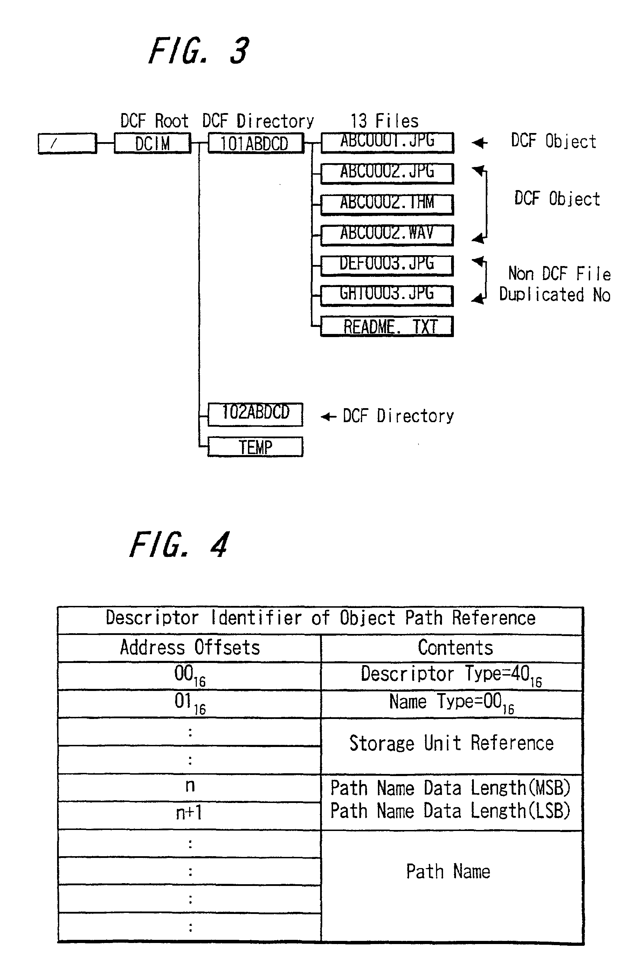

FIG. 3 shows the manner in which the camera storage subunit 12 may manage the file thus stored according to a DCF system (Design rule for Camera File system). The DCF system may determine a rule to give a file name required when image information is managed as a file. As illustrated, a file may be formed as a tree structure and thereby managed hierarchically. The highest-order hierarchy may be DCF root, and the second hierarchy may be DCF Directory (data other than DCF Directory may be used). The lowest-order hierarchy connected to the DCF directory may be DCF file.

The DCF Directory may express predetermined positions (high-order first digit to third digit) of an assigned ID by numerals and may also express other digits by alphabets. A user can identify DCF Directory based on the positions of the digits of numerals. Moreover, IDs may be made corresponding to DCF files connected thereunder.

Of the DCF file at the lowest-order layer, a file in which image data was stored may be used as a DCF object. The DCF file also may express predetermined positions (high-order fourth digit to seventh digit) of assigned ID by numerals and may express other digits by alphabets. A user is able to identify the DCF file based on the positions of the digits of the numerals. In the DCF object, one Object may be comprised of a plurality of files. When one Object is comprised of a plurality of files, at least numeral portions of the assigned ID may be the same value.

Next, a structure of a descriptor which may feature the mode for carrying out the invention will be described below. FIG. 4 is a diagram showing an example of a structure of an object path reference, and illustrates object path references in correspondence with address offset values. As the contents of this descriptor, there may be described a descriptor type, a name type, a storage unit reference, data lengths of path name and path name data. A user can designate specific storage from a plurality of storage based on data on storage unit reference. With respect to the path name, there may be described all path names (names) of object list and object entry within the descriptor.

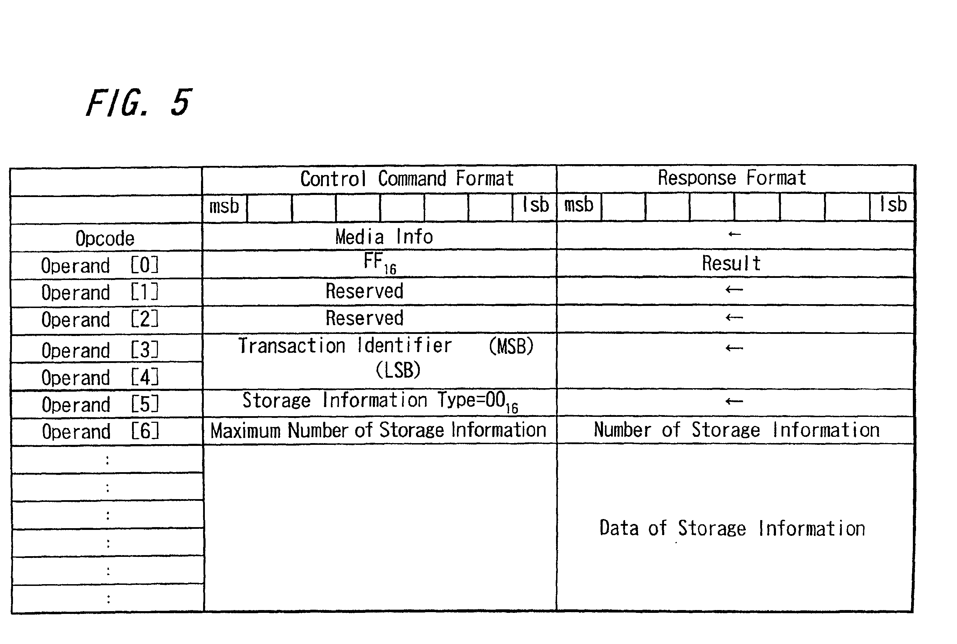

FIG. 5 shows an example of processing required when a storage info entry processing get processing (GET STORAGE INFO ENTRY) is effected on a portion which serves as a target from a portion which serves as a controller connected to the bus. A control command format shown on the left-hand side of FIG. 5 shows examples of command data transmitted from the controller to the target byte by byte. A response format shown on the right-hand side of FIG. 5 shows examples of response data returned from the target to the controller. Portions in which columns of response data are shown by left arrows may indicate that command data will be returned as they are.

The first one byte may be used to transmit command data indicative of GET STORAGE INFO ENTRY. Such command data may be returned as response data. In this example, data onTransaction identifier may be transmitted and received in the form of 2 bytes, whereby the controller side can clearly associate command data and response data thereby to confirm whether or not a file is created correctly. A Max Number of storage information command may be used to designate the number of storage information entries that should be read out. Response data onNumber of storage information to return may be used to return data indicative of the number of storage information that had been read out in actual practice. Then, response data following Number of storage information to return may be used to transmit data on Storage information entries.

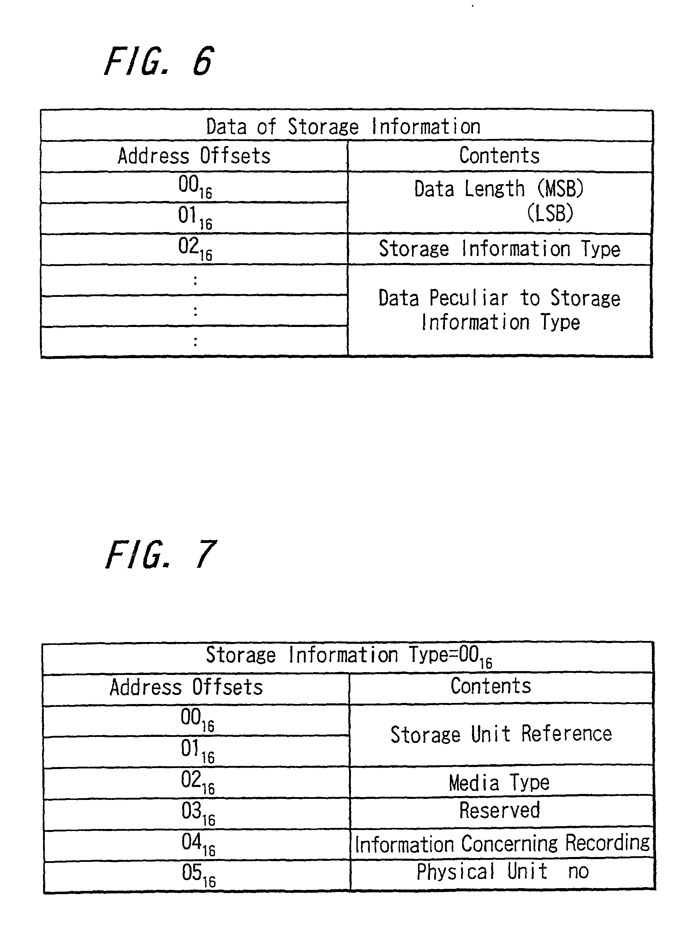

FIG. 6 shows an example of a configuration of data on Storage information entries. This data may comprise 2-byte data indicative of data length, 1-byte data indicative of Storage Information Type and Storage Information Type specific data indicative of actual data, in that order.

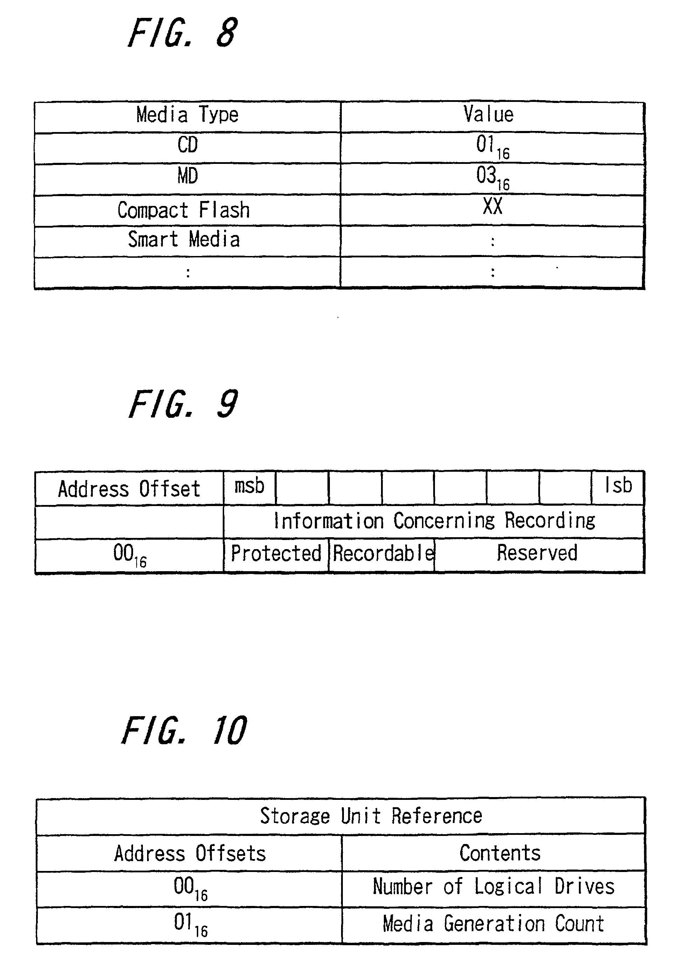

FIG. 7 shows an example of Storage Information Type specific data in detail. This data may comprise storage unit reference, media type, recordable information and physical unit no, in that order. The storage unit reference may be comprised of Logical Drive Number and Recycle Count as shown in FIG. 10. The Recycle Count may be a counter value which changes each time the state changes. By setting this counter value to the target side and the controller side so that the counter value may be recognized therebetween, it is possible to prevent a malfunction in which the controller side will communicate with a wrong target side.

The media type may be defined as shown in FIG. 8, for example. That is, values are defined for every media such as a CD (compact disc), an MD (mini disc), compact flash or smart media (both of which are trade names) available as storage (recording) media of the devices of this example.

The recordable information may be arranged as data shown in FIG. 9 and has recorded thereon protect information of data recorded on a media (information that should not be erased) and information indicating whether or not data can be recorded on the media.

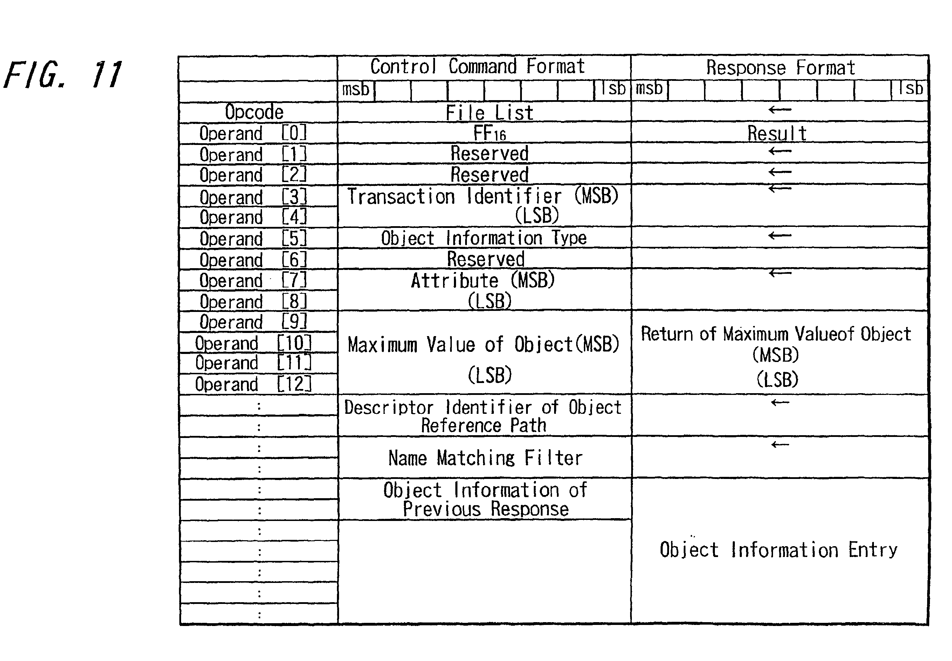

Next, FIG. 11 shows an example of processing required when the object entry get processing is effected on the portion serving as the target from the portion serving as the controller connected to the bus. The control command format shown on the left-hand side of FIG. 11 shows examples of command data transmitted from the controller to the target byte by byte. The response format shown on the right-hand side of FIG. 11 shows examples of response data transmitted from the target to the controller. Portions in which columns of response data are shown by left arrows may indicate that command data obtained at that very moment will be returned as they are.

The first one byte may be used to transmit command data indicative of GET OBJECT ENTRY. That command data may be returned as the response data. Then, in this example, when data on Transaction identifier is transmitted and received in the form of 2 bytes, the controller side can clearly associate command data and response data with each other to thereby confirm whether or not a file is created correctly. The Object information Type of command data may be used to designate type of data. Scarch Attribute may be used to instruct an object to get data. Also, Descriptor Identifier for object reference path may be used to designate a desired descriptor. Name matching filter may be used to specify a descriptor.

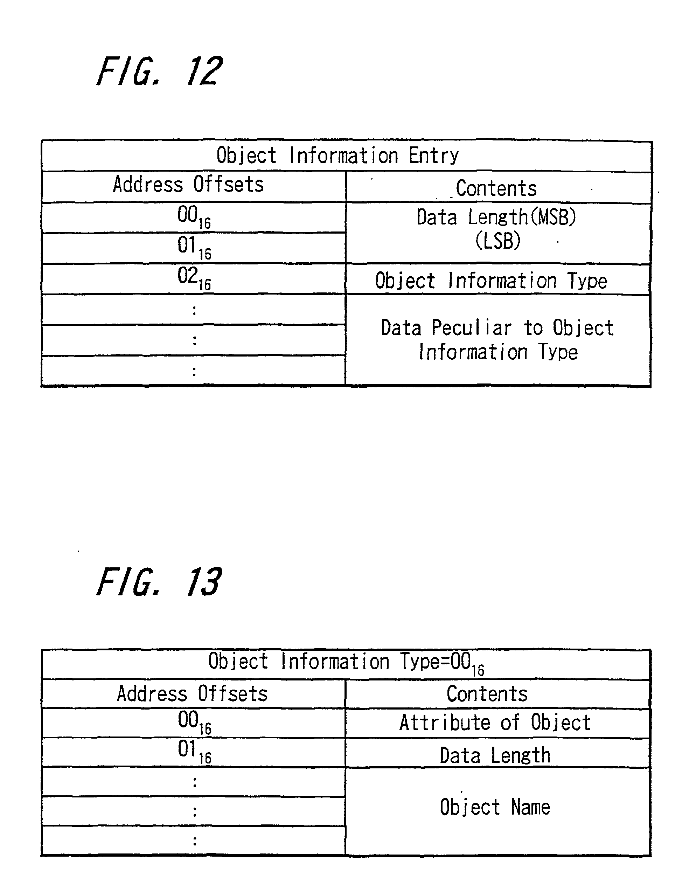

Object information entries contained in response data may be arranged as shown in FIG. 12. This data may comprise 2-byte data indicative of data length, 1-byte data indicative of Object Information Type and Object Information Type specific data on actual data, in that order.

FIG. 13 shows a data structure of Object Information Type specific data. This data may comprise Object Attribute data indicating whether data is a directory list or a file, data length and Object Name which indicates object name. The Object Name which indicates object name may be described as text data that shall be in accordance with the prescriptions of DOS, for example.

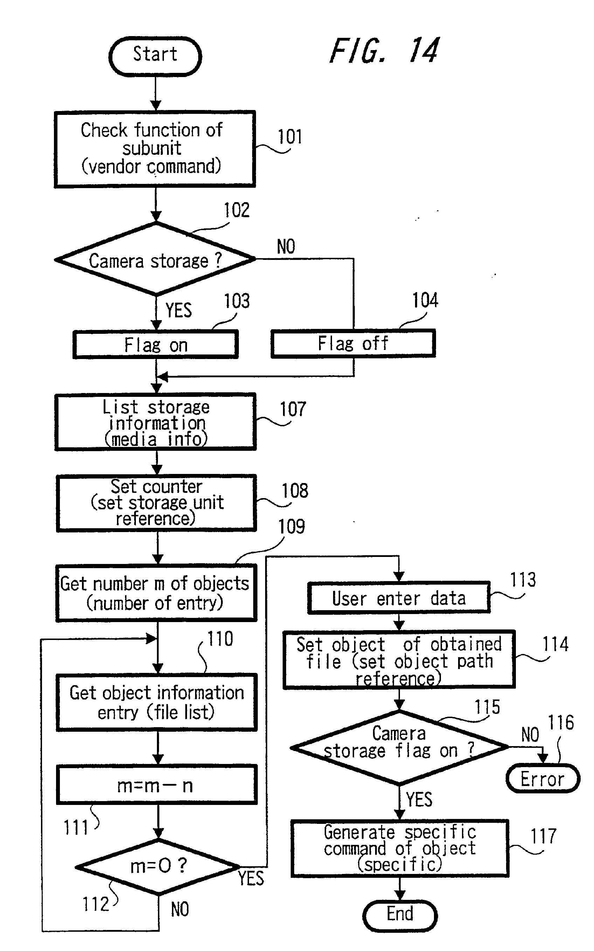

An example of processing for retrieving files by transmitting command data and response data will be described with reference to a flowchart of FIG. 14. This flowchart is the processing executed by the controller side. Initially, in order to check functions of subunits, commands of OPEN DESCRIPTOR for opening a descriptor so as to read data, READ DESCRIPTOR for reading data from the opened descriptor and CLOSE DESCRIPTOR for closing the read-out descriptor so as not to read the descriptor may be transmitted and corresponding processing may be executed (step 101). It is determined by this checking whether a called subunit is a camera storage (i.e. target storage section that should be processed in this example) (step 102). If the called subunit is the camera storage, then a camera storage flag is held at ON (step 103). If the called subunit is not the camera storage, then the camera storage flag is held at OFF (step 104).

Then, it is determined whether or not the descriptor thus read-out is a general storage (General Storage) (step 105). This general storage may be data indicating whether data is data that should be used commonly by each storage. This general storage may be added to media type data, for example. If this data is not the general storage, then it is determined that an error occurred. Then, control is ended (step 106).

If this data is the general storage, then processing for acquiring list storage information may be executed. This acquiring processing may be equivalent to the transmission processing, shown in FIG. 5, of command data and response data. Then, a counter value of Recycle Count (see FIG. 10) obtained at the very moment may be set (step 109). Then, an object number m may be obtained, and an object information entry n which is the data on the object number may be obtained (step 110). A value which results from subtracting the thus acquired entry n from the value m is set to a new value m (step 111). It is determined whether or not the subtracted value m becomes null (step 112). If it is not null, then control goes back to the step 110, wherein the steps are repeated until data on all files are obtained.

If it is determined at the step 112 that the value m becomes null, then control is ended, and the controller could retrieve files. Then, when a user inputs any data (step 113), an object of the file thus obtained is set (step 114). It is determined whether or not the camera storage flag is held at ON (step 115). If this flag is not held at ON, then it is determined that an error occurred (step 116). If this flag is held at ON, then there is generated a specific command for such object, and actual processing for such object is executed (step 117).

Of the processing in these steps 109 to 112, if the media generation count value obtained based on the media info command by the controller at the step 107 is set to each command and the media generation count value updated on the camera storage side when the disk was detected is different from the media generation count value designated by the command, then the fact that the media has been changed is informed to the controller by rejecting the command. In this case, the controller confirms that the media is inserted again and gets the file list by executing the steps 107 to 112. In the specific command at the step 117, the fact that the media has been changed can similarly be informed to the controller by using the media generation count value.

Incidentally, as concrete processing for managing data by this DCF system, all of the descriptor structures shown in FIG. 3, for example, may be transmitted to the controller side. Alternatively, the DCF directory and the underlying DCF file may be handled as one body, thereby resulting in the hierarchy, that is handled by the controller in actual practice, being decreased. Moreover, the name of the DCF directory and the DCF file may be integrated, whereby the DCF file can be judged from the name of the DCF directory.

Processing, which might be called an object handle (Object Handle), may be applied. That is, the target side may give a unique object handle. 4 bytes data may be comprised of descriptor of 1 byte, recycle counter of 1 byte and object handle data on2 bytes. The controller may receive such object handle data from the target side as response data, and may learn the interconnection and the like based on the object handle data. The object handle data may give individually ID (identification code) in response to the number of such data. When a bus reset occurs, the controller may get this object handle data from the target one more time. Also, even after a time of certain duration elapsed, such object handle data may be determined as invalid.

Moreover, full path object reference may be converted into handle object reference so that, when the handle object reference is not in use, such handle may be closed. When a handle is designated, a name of such handle may be acquired.

Moreover, there may be prepared a command which might be called a navigation command, for example. If such command is designated by the controller, then when a handle which becomes a parent is opened, data on a handle which becomes a child interconnected to its parent may be returned to the controller from the target. At that time, this command may be used to execute close processing such that information of parent (high-order layer) should be inhibited from being read out. Simultaneously, this command may be used to execute open processing for reading information on children (low-order layer). If the navigation command is prepared as described above, then it becomes possible to sequentially read data interconnected in the form of hierarchical structure without individually designating open and close processing of the so-called descriptor.

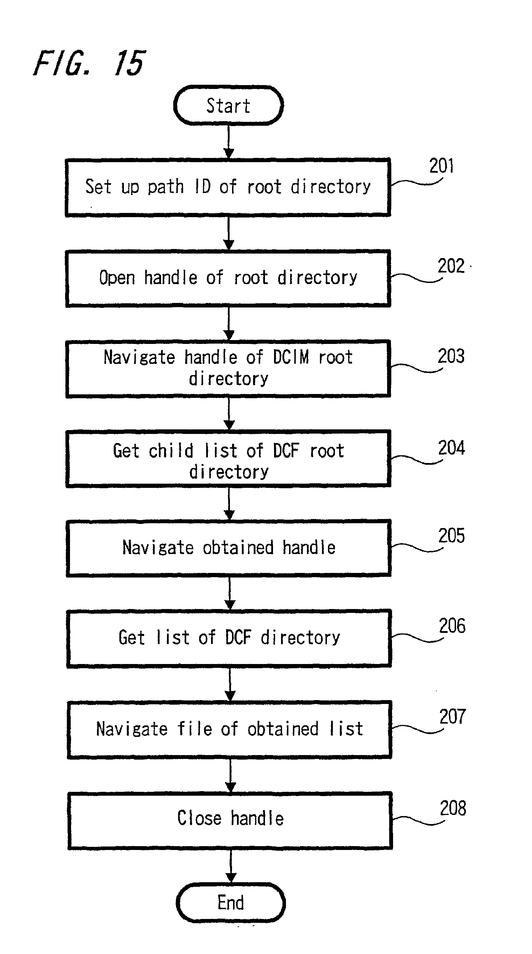

A flowchart of FIG. 15 shows an example in which data can be read out one after another by using the navigation command. Initially, a path ID of root directory may be set up (step 201), and a root directory handle may be opened (step 202). Then, the handle of DCIM root directory may be navigated (step 203). Next, a child list of DCF root directory may be acquired (step 204), and the handle thus acquired may be navigated (step 205). Then, a list of DCF directory may be acquired (step 206), and a file of the list thus acquired may be navigated (step 207). When data on the corresponding file is acquired, the handle is closed (step 208). If the navigation command is used one after another, then it becomes possible to navigate data on the next layer one after another thereby to read data.

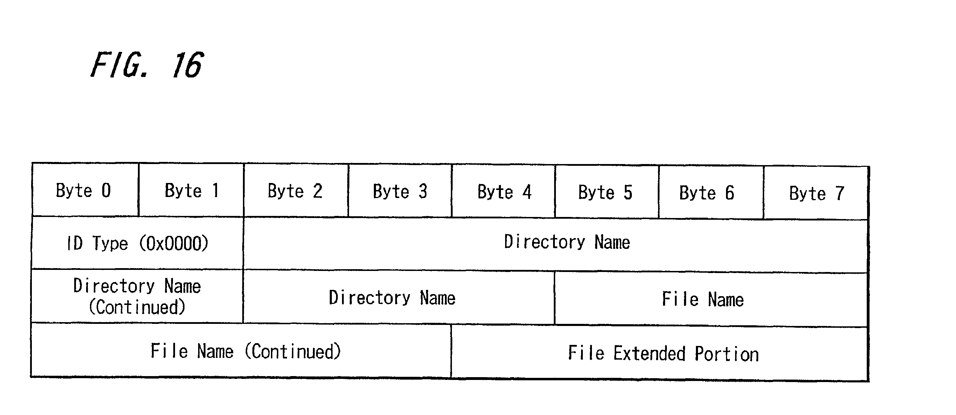

A second mode for carrying out the invention will be described next with reference to FIGS. 16 to 34. The present mode for carrying out the invention is applied to the bus system shown in FIG. 1 similarly to the above-mentioned first mode for carrying out the invention. Processing of this invention may be applied to the case in which the digital electronic still camera 2 is interconnected through the IEEE 1394 high-performance serial bus 1 to the personal computer 4 and the printer 5. The configuration shown in FIG. 2 may be applied to the configuration of the personal computer 4. The processing that has been described so far with reference to FIG. 3 may be applied to the management method serving as the DCF system (Design rule for Camera File system).

Then, in the mode for carrying out the invention, some recording media may be attached to the camera storage subunit 12 of the digital electronic still camera 2, and image data and the like may be recorded on such recording media. This recording media may be detachable, and might be a memory card or the like, for example.

The personal computer 4 may be used to display, process and print image data recorded on the recording media attached to the camera storage subunit 12 of this digital electronic still camera 2. To this end, data transmitted between the digital electronic still camera 2 and the personal computer 4 through the IEEE 1394 high-performance serial bus 1 may be command data that shall be in accordance with the AV/C protocol defined in order to exchange control data on the IEEE 1394 high-performance serial bus.

A DCF system (Design rule for Camera File system) which is one of the standard systems of management method of data recorded on a memory card may be applied to file processing executed when image data is recorded on the recording media attached to the camera storage subunit 12 as still picture files. The processing that has been described so far with reference to FIG. 3 also may be applied to this DCF system. The recording media may be formatted logically by an FAT file system used in an operation system (OS) of personal computer, for example. Also, in the DCF, the directory name and the file name may include numbers.

FIG. 16 shows an example of file ID of data recorded on the recording media of this example. Here, the file ID may be 24-byte data in which an ID type, a directory name and a file name are written.

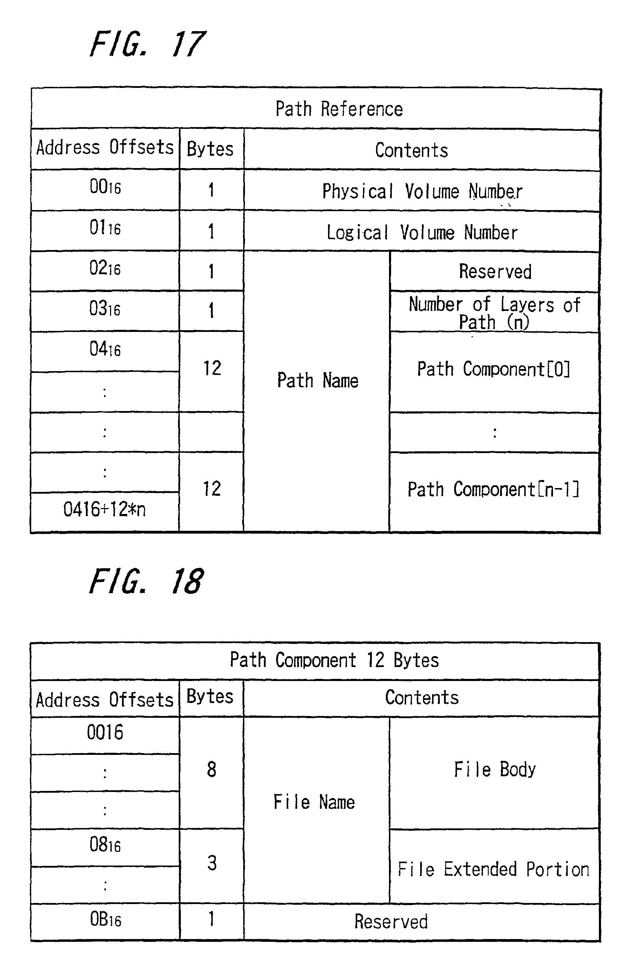

FIG. 17 shows an example of path reference data. This data may have written therein a physical volume number, a logical volume number and data on path name.

FIG. 18 shows an example of path component data in which data on file name is written.

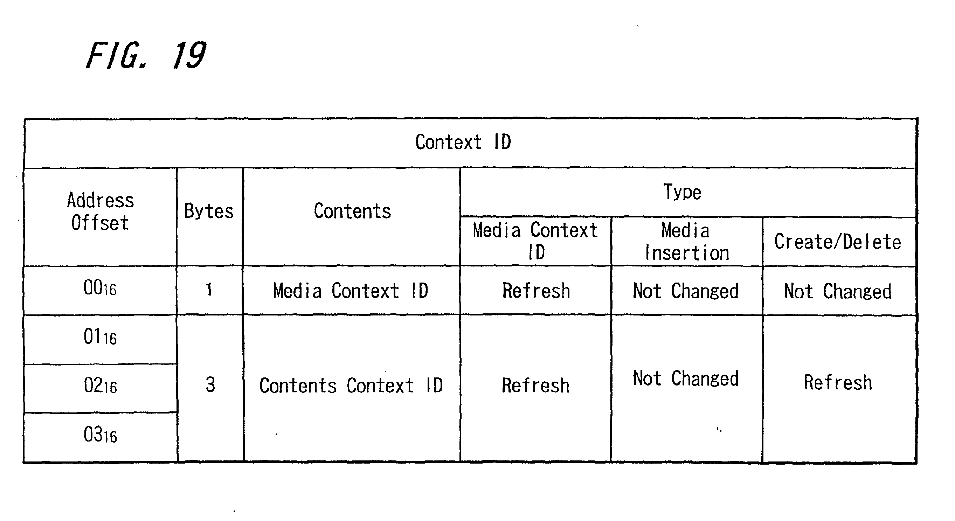

FIG. 19 shows an example of context ID data. In the case of this example, independently of the file ID, there may be set in the inside an identification number called a context ID (context ID) which might enable the digital electronic still camera 2 and the personal computer 4 to manage data. As this context ID, there may be available two kinds of media context ID and contents context ID. An ID value of media context ID may be updated only when the recording media is attached. Such ID value may not be updated when the recording media is removed, a file is created within the media or when the file is deleted. An ID value of contents context ID may be updated when the recording media is attached, the file is created within the media or when the file is deleted, and may not be updated when the recording media is removed. When the context ID value is updated, it is customary that the value may be incremented one by one. These context ID may be set to both of the target device (here, the electronic still camera 2) and the control device (here, the personal computer 4).

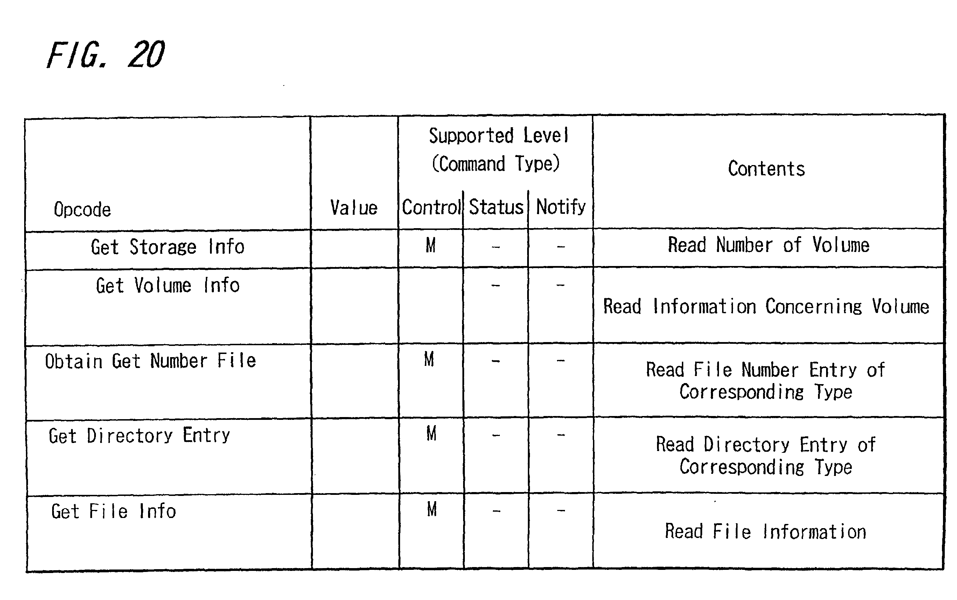

When control based on this context ID is executed, as command that shall be in accordance with the AV/C protocol, there may be prepared, as shown in FIG. 20, [GET STORAGE INFO] (command for learning information concerning the number of volumes), [GET VOLUME INFO] (command for obtaining information concerning a designated volume), [GET NUM INFO] (command for obtaining information concerning the number of files), [GET DIR ENTRIES] (command for obtaining information concerning a designated directory) and [GET FILE INFO] (command for obtaining information concerning a designated file). Command types of these commands may be control commands that are all used to transmit control commands to the party being called.

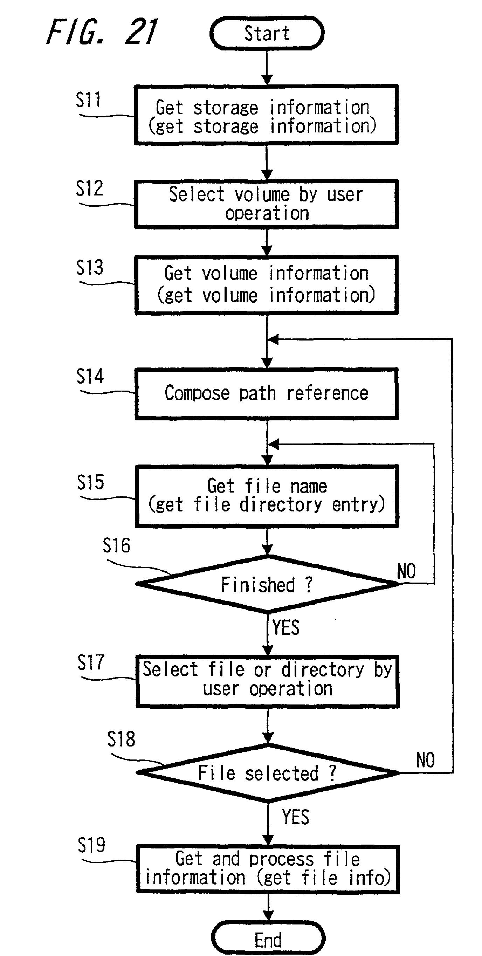

FIG. 21 is a flowchart showing processing for getting information by using these commands (processing in which the personal computer 4, for example, gets information concerning image files recorded on the recording media attached to the electronic still camera 2).

Initially, storage information is acquired by the [GET STORAGE INFO] (step S11). Arbitrary one may be selected from volume information by a user when the user operates the personal computer 4 (step S12). Then, the volume information thus selected may be obtained by the [GET VOLUME INFO] command (step S13). A path reference may be arranged based on the information thus obtained (step S14).

Next, information concerning a designated directory name may be obtained by the [GET DIR ENTRIES] command (step S15). The processing for obtaining this directory name may be repeated the number of times corresponding to the number of directories. If it is determined that all information may be obtained (step S16), then a file or a directory may be selected by a user operation (step S17). Here, it is determined whether a file is selected (step S18). If it is determined that a file is not selected, the control goes back to the step S14. If it is determined that a file is selected, then there may be executed processing for obtaining file information designated by the [GET FILE INFO] (step S19).

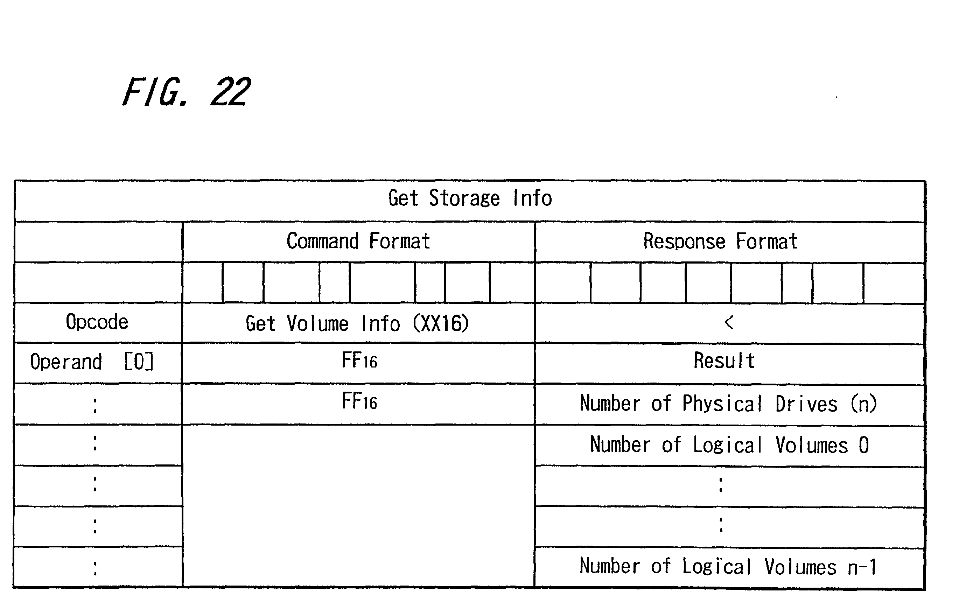

FIG. 22 shows an example of [GET STORAGE INFO] command data which may be the command used to learn the number of volumes. Incidentally, in the sheets of drawings following FIG. 22, commands shown by arrows on the columns of response illustrate that command data should be returned as they are. This [GET STORAGE INFO] command may have added thereto data indicative of [GET STORAGE INFO]. In the response data, there are located physical data indicative of the number of drives and logical data indicative of the number of drives.

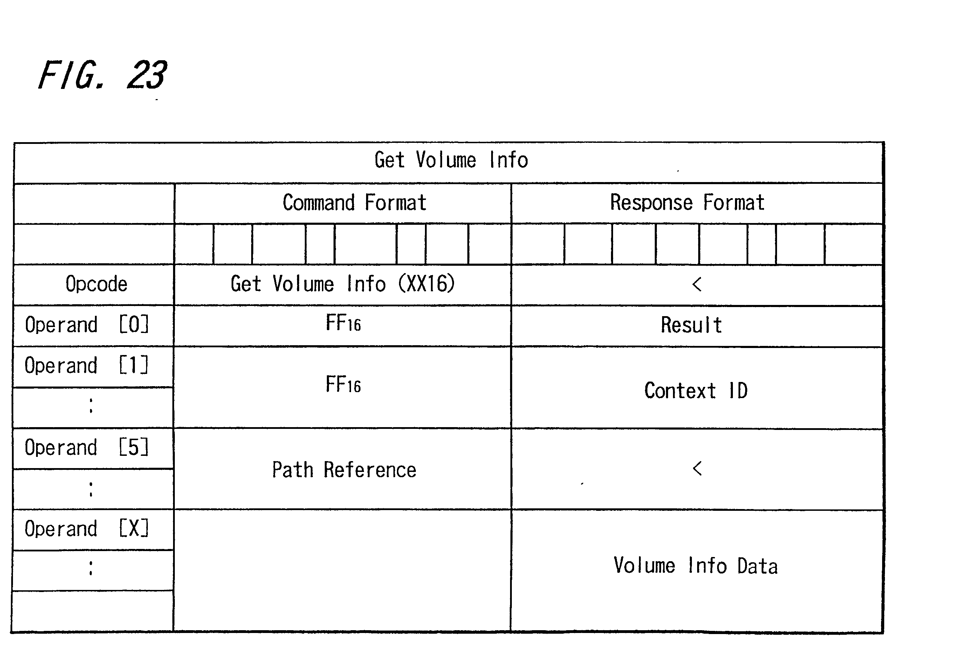

FIG. 23 shows an example of [GET VOLUME INFO] command data which may be command used to get information concerning a designated volume. This command data shows a corresponding command and may include path reference data which is used to designate a volume. Its response data may have added thereto context ID concerning the designated path reference and the volume info data.

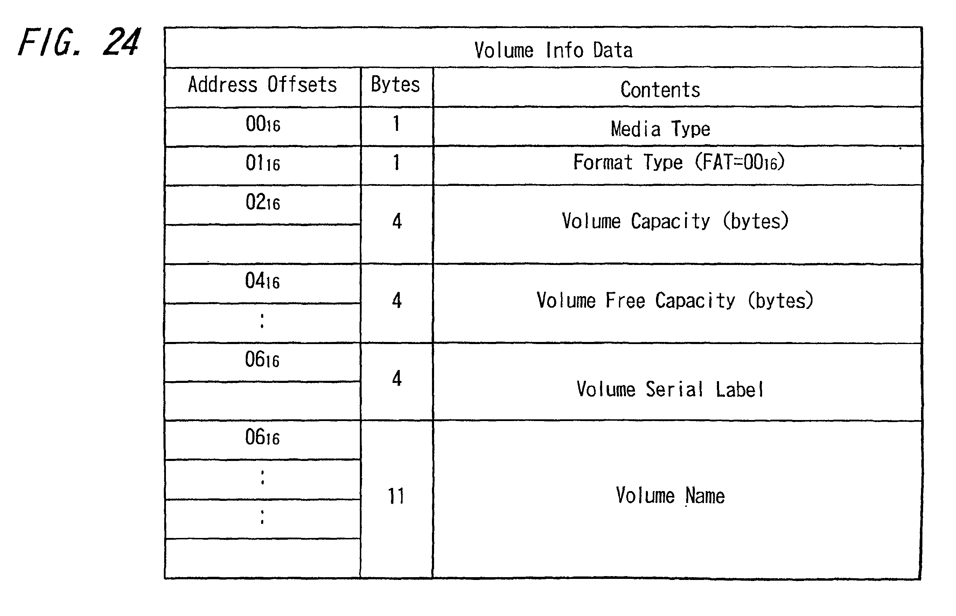

FIG. 24 is a diagram showing a configuration of volume info data. This data may comprise data on media type concerning a designated volume, data on format type, data on volume capacity, data on volume empty capacity, data on volume serial label and data on volume name, in that order.

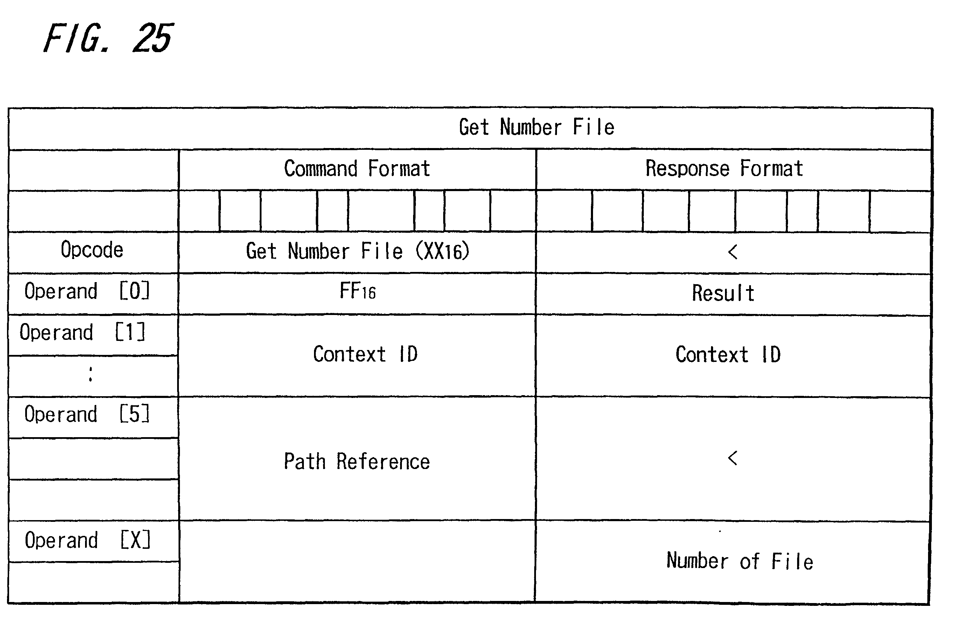

FIG. 25 shows an example of [GET NUM INFO] command data which may be command used to obtain information concerning the number of files. This command data shows a corresponding command, and may comprise data on context ID for designating a file and path reference data. Its response data may include context ID of the target device side and may have added thereto data indicative of the number of designated files.

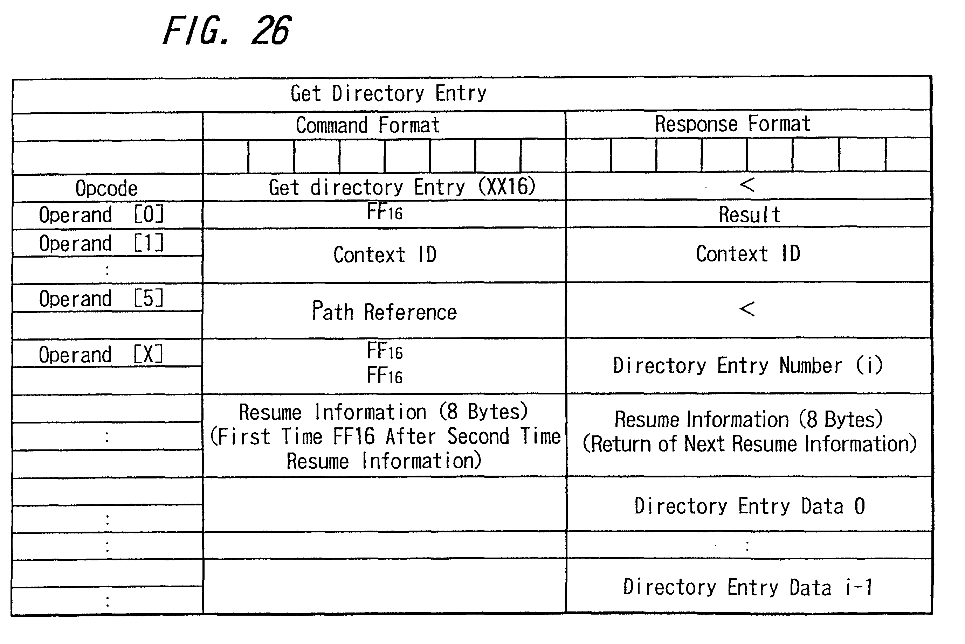

FIG. 26 shows an example of [GET DIR ENTRIES] command data which may be command used to obtain information concerning a designated directory. This command data shows a corresponding command and may comprise data on context ID for designating a directory and path reference data. Also, this command data may comprise resume information data. This data may include a maximum value (FF) disposed at the starting portion, and may express the number of processing by subtracting its value each time this command is transmitted. Its response data may comprise data on context ID on the target device side and designated directory entry data.

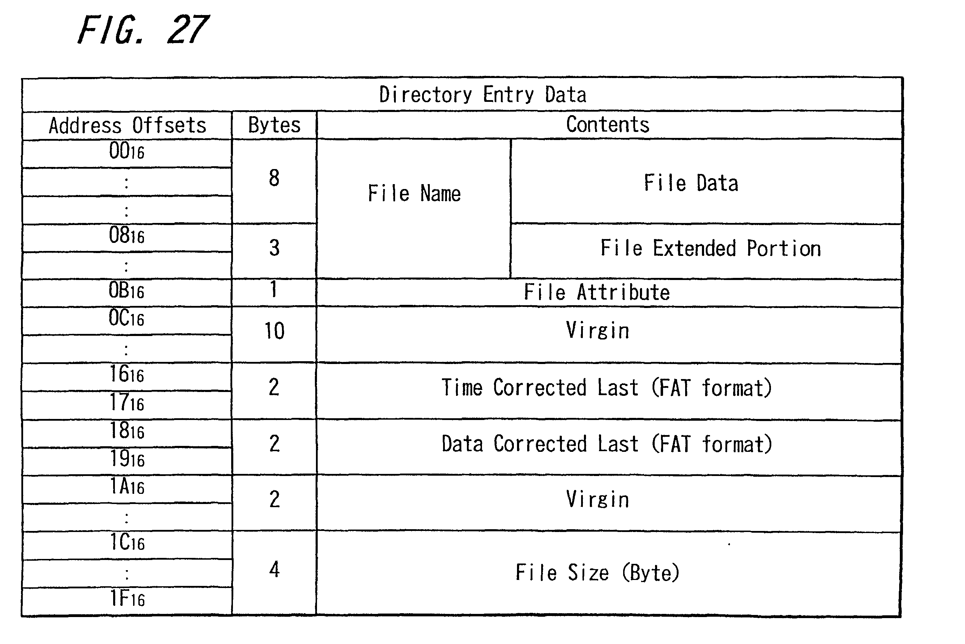

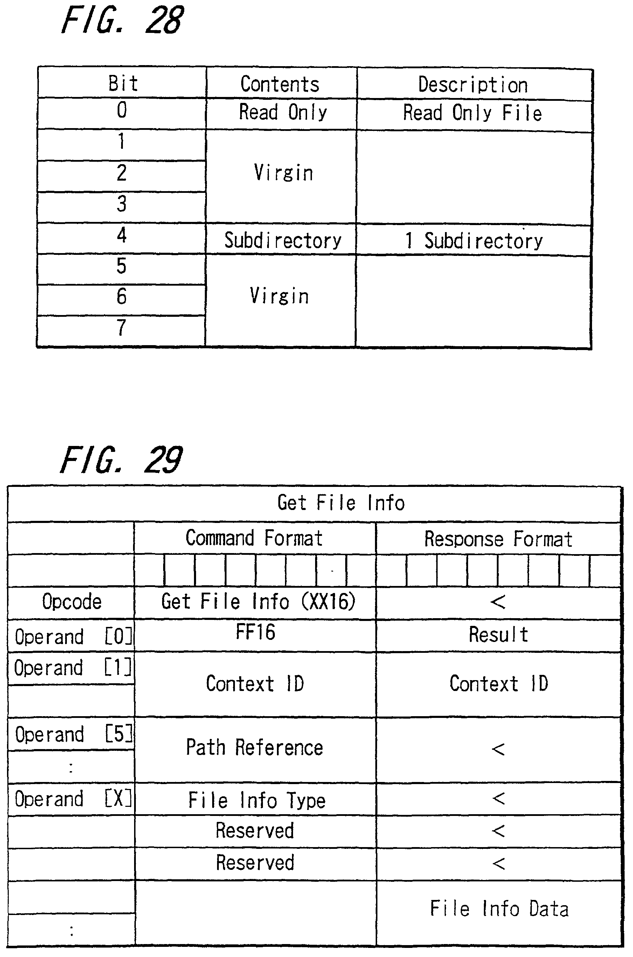

FIG. 27 shows an example of directory entry data. This data may comprise data onfile name, data on file attribute, data on last modification time, data on last modification date and data on data quantity of file. The file attribute data may be defined as shown in FIG. 28, for example. That is, this data may comprise read-only file data and sub-directory data (data indicating not file but directory).

FIG. 29 shows an example of data on command [GET FILE INFO] which is used to obtain information concerning a designated file. This command data shows a corresponding command and may comprise data on context ID for designating a file and path reference data. Also, this data may comprise data on file info type which is used to indicate type of data on file data (e.g. the number of pixels of image, format, etc. when data is image data). Its response data may have added thereto data on context ID of the target side and may include information (not data such as image data but guide information) concerning a file.

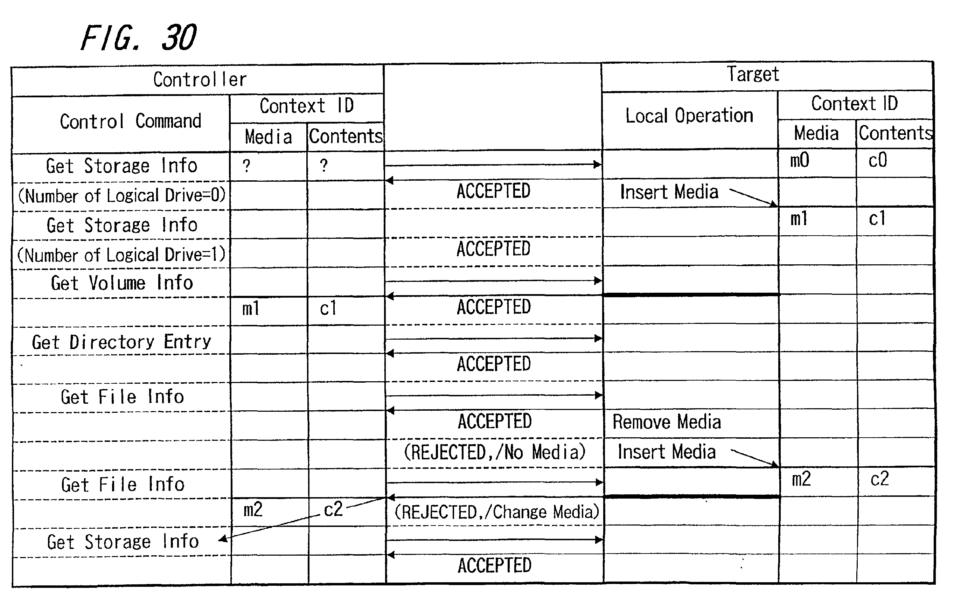

FIG. 30 shows an example of the manner in which context ID data is processed between the control device and the target device. In the initial state, let it be assumed that m0, c0 are set to the target side as context ID data and that a recording media is not attached. In this state, when the [GET STORAGE INFO] is transmitted from the controller to the target side, data indicating that the number of drive is null may be returned to the controller from the target side. Thereafter, when the recording media is attached, the context ID data on the target side may be updated to m1, c1. Then, its context ID (m1, c1) data may be transmitted to the controller side by the updated [GET STORAGE INFO] command data. In this state, when the [GET VOLUME INFO] command data, the [GET DIR ENTRIES] command data and the [GET FILE INFO] command data are transmitted, guide information concerning corresponding data may be obtained sequentially by response data relative to command data.

In this state, when the recording media is replaced with other recording media, the context ID data on the target side may be updated to m2, c2. At that time, when the [GET FILE INFO] command data or the like is transmitted, it is determined by the controller that the context ID data located at the response data does not agree with ID data set to the controller. Thus, the replacement of the recording media is detected, and the context ID data on the controller may be updated to m2, c2. Then, if necessary, information concerning the updated media may be obtained by the transmission of the [GET STORAGE INFO] command data.

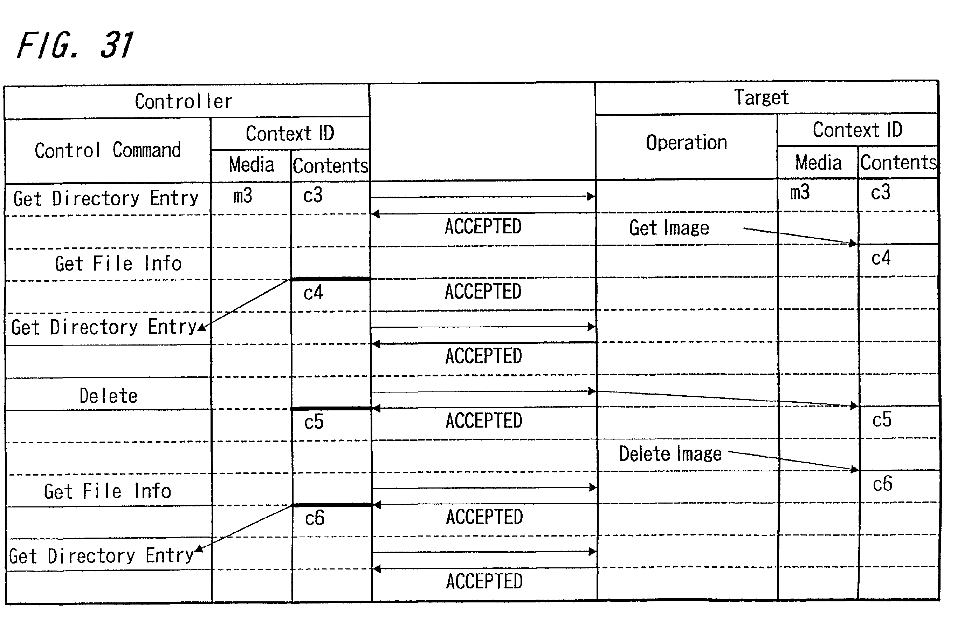

FIG. 31 shows processing executed when image data or the like is stored in the recording media. When image data is stored in the recording media, context ID data on the media may not be updated, but only context ID data on the contents may be updated.

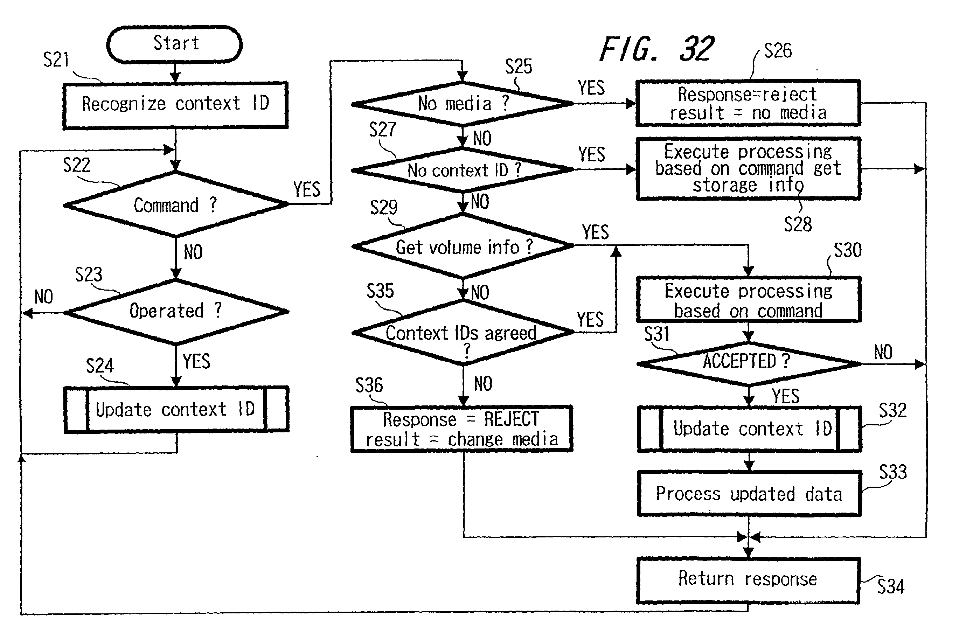

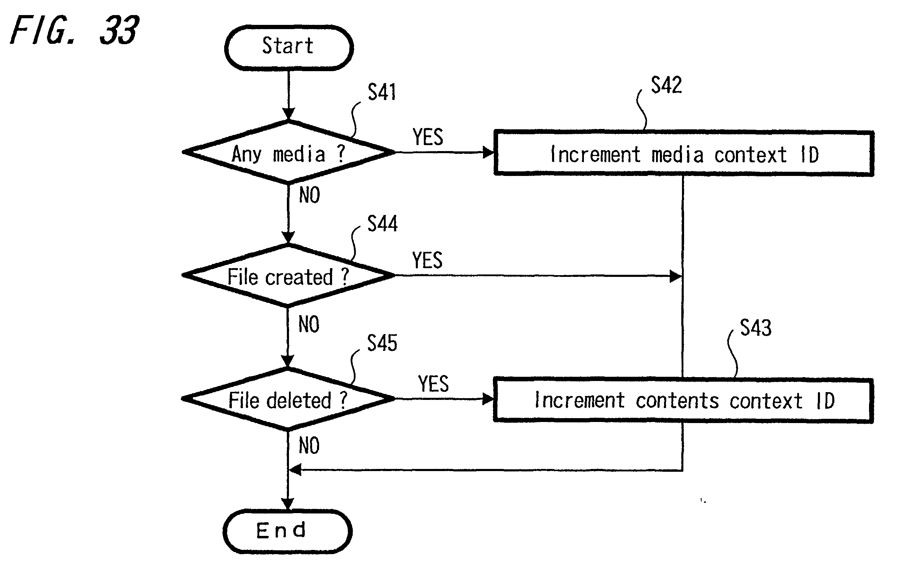

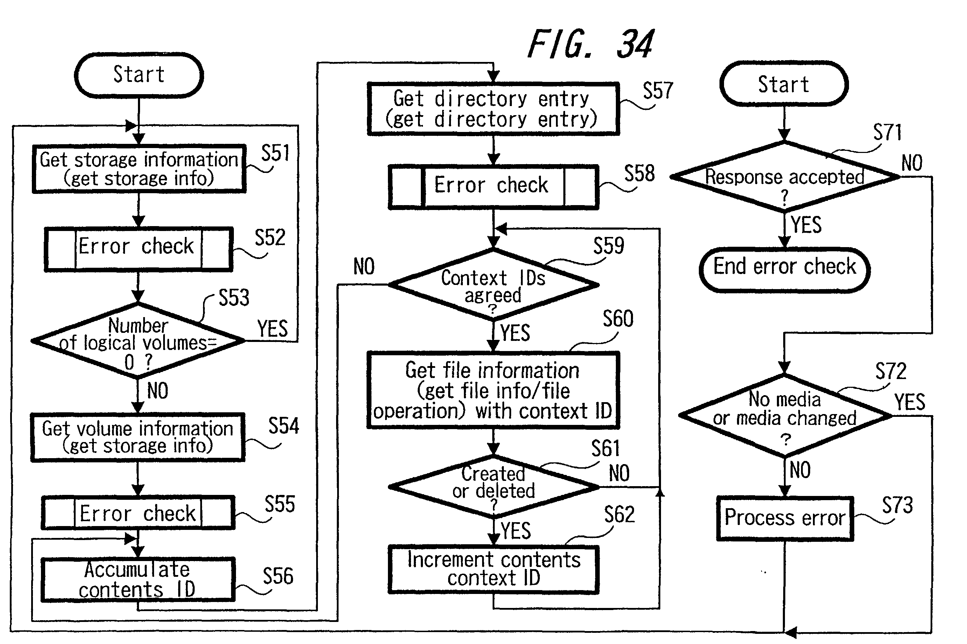

Processing executed within the target device when these processings may be executed will be executed in a flowchart of FIG. 32, for example. Processings executed within the controller device will be executed in a flowchart of FIG. 34. Processing for updating the context ID data on the target device may be executed in a flowchart of FIG. 33.

By executing the file operation as described above, it is possible to efficiently execute the file operation of the device to which the recording media such as the digital electronic still camera is attached.

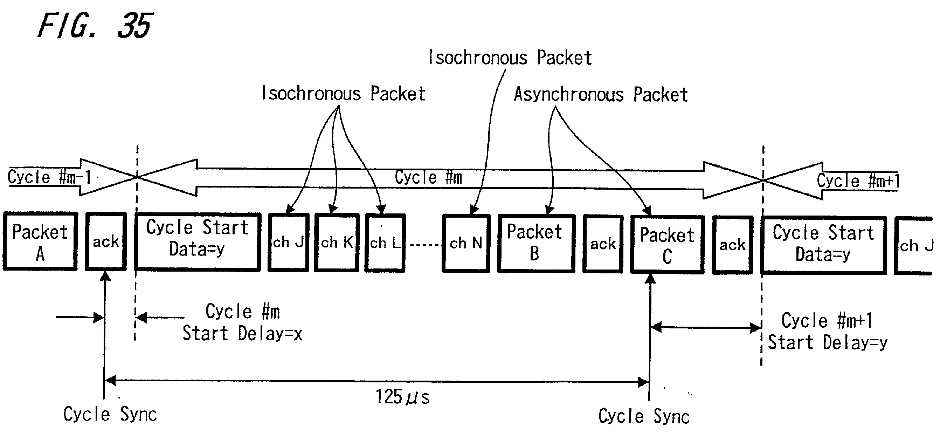

The manner in which data is transmitted through the IEEE 1394 high-speed serial bus 1 to which the respective devices are connected in the first and second embodiments that have been described so far will be described below with reference to FIG. 35 and the following sheets of drawings.

FIG. 35 is a diagram showing a data transmission cycle structure of a device connected via the IEEE 1394. According to the IEEE 1394, data is divided into packets and transmitted in a time-division manner based on a cycle of a duration of 125 ?s. This cycle is created by a cycle start signal supplied from a node having a cycle master function (any device connected to the bus). An isochronous packet secures a band necessary for transmission referred to as a "band" although it is a time unit) from the start of all cycles. Accordingly, in the isochronous transmission, the transmission of data within a constant time can be assured. However, if a transmission error occurs, then data will be lost because this data transmission cycle structure has no mechanism for protecting data from the transmission error. In the asynchronous transmission in which a node, which secures a bus as a result of arbitration in a time which is not used in the isochronous transmission of each cycle, transmits the asynchronous packet, although a reliable transmission is assured by using acknowledge and retry, a transmission timing cannot be made constant.

When a predetermined node transfers data in the isochronous transfer mode, such node has to be corresponding to the isochronous function. At least one of the nodes corresponding to the isochronous function has to have a cycle master function. Further, at least one of the nodes connected to the IEEE 1394 serial bus has to have an isochronous resource manager function.

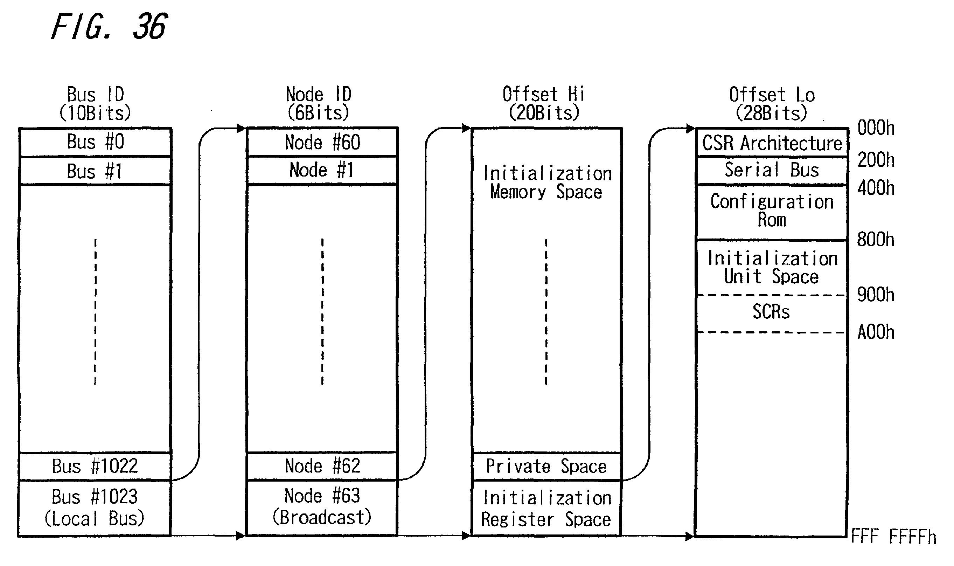

The IEEE 1394 is based on a CSR (Control & Status Register) architecture having a 64-bit address space prescribed by the ISO/IEC 13213. FIG. 36 is a diagram to which reference will be made in explaining a structure of a CSR architecture address space. High-order 16 bits represent a node ID indicative of a node on each IEEE 1394, and remaining 48 bits are used to designate an address space given to each node. The high-order 16 bits are separated into 10 bits of a bus ID and 6 bits of a physical ID (node ID in a narrow sense). Values in which all bits go to 1 are for use as a special purpose, and hence 1023 buses and 63 nodes can be designated. The node ID is given again when a bus reset occurs. The bus reset occurs when the arrangement of the device connected to the bus 1 is changed. For example, when any one of devices connected to the bus 1 is detached from the bus or when it is recognized that a new device is connected to the bus 1, the bus reset is executed.

A space prescribed by high-order 20 bits of 256-terabyte space prescribed by low-order 48 bits is separated into an initial register space (Initial Register Space) for use as a register unique to 2048-byte CSR, a register unique to the IEEE 1394, or the like, a private space (Private Space) and an initial memory space (Initial Memory Space). A space prescribed by low-order 28-bits are for use as a configuration ROM (Configuration read only memory), an initialunit space (Initial Unit Space) for use unique to a node and plug control register (Plug Control Register (PCRs)) if a space prescribed by its high-order 20 bits is the initial register space.

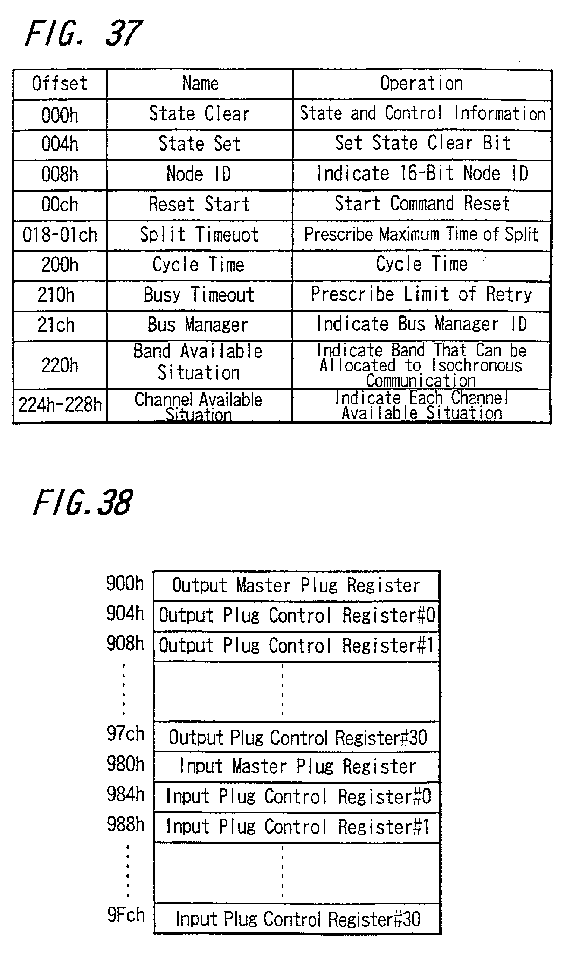

FIG. 37 is a diagram to which reference will be made in explaining offset addresses, names and operations of major CSRs. The offset in FIG. 37 indicates an offset address from FFFFF0000000h (numerals with h represent a hexadecimal notation). A bandwidth available register (Bandwidth Available Register) having an offset 220h represents a band which can be allocated to the isochronous communication, and only a value of node which is being operated as an isochronous resource manager is made effective. Specifically, although each node includes the CSR shown in FIG. 36, only the bandwidth available register of the isochronous resource manager is made effective. In other words, only the isochronous resource manager includes the bandwidth available register substantially. The bandwidth available register preserves a maximum value when the band is not allocated to the isochronous communication and its value decreases each time the band is allocated to the isochronous communication.

A channel available register (Channel Available Register) of offsets 224h to 228h has bits respectively corresponding to channel numbers from channel 0 to channel 63. If the bit is 0, then this shows that the corresponding channel is already allocated. Only the channel available register of the node which is being operated as the isochronous resource manager is effective.

Referring back to FIG. 36, a configuration ROM based on a general ROM (read only memory) format is located at addresses 200h to 400h within the initial register space. Bus info block, root directory and unit directory are located at the configuration ROM. An ID node indicative of vender of devices is stored in a company ID (Company ID) within the bus info block. A unique ID unique to the device is stored in a chip ID (Chip ID).

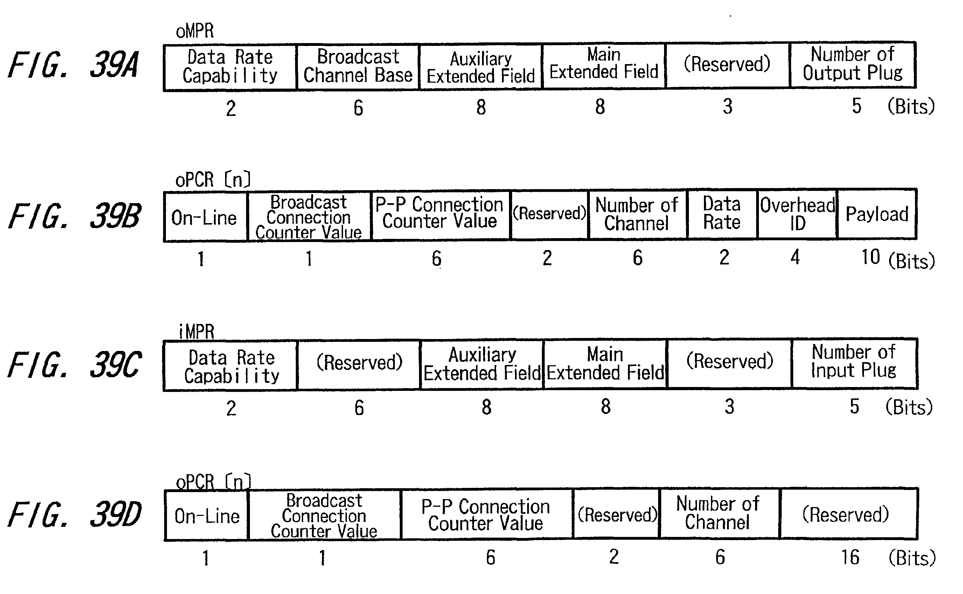

In order to control input and output of the device through the interface, the node includes a PCR (Plug Control Register), prescribed by the IEC 1883, at addresses 900h to 9FFh within the initial unit space shown in FIG. 36. This is a substantiation of a concept of a plug in order to form a signal channel similar to an analog interface from a logical standpoint. FIG. 38 is a diagram to which reference will be made in explaining the arrangement of the PCR. The PCR includes an oPCR (output Plug Control Register) expressing an output plug and an iPCR (input Plug Control Register) expressing an input plug. The PCR also includes registers oMPR (output Master Plug Register) and iMPR (input Master Plug Register) indicating information of the output plug or the input plug proper to each device. Each device cannot include a plurality of oMPRs and iMPRs but can include a plurality of oPCRs and iPCRs corresponding to individual plugs depending upon a device capability. The PCR shown in FIG. 38 includes 31 oPCRs and iPCRs. The flow of isochronous data can be controlled by operating registers corresponding to these plugs.

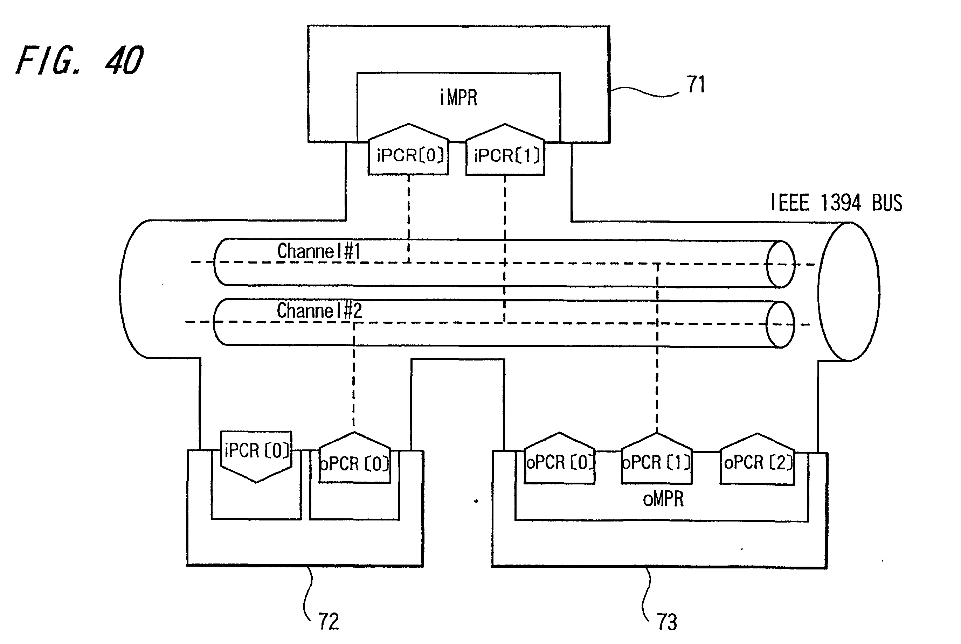

FIG. 39 is a diagram showing arrangements of the oMPR, the oPCR, the iMPR and the iPCR. FIG. 39A shows the arrangement of the oMPR, FIG. 39B shows the arrangement of the oPCR, FIG. 39C shows the arrangement of the iMPR, and FIG. 39D shows the arrangement of the iPCR, respectively. A code indicative of a maximum transfer speed of isochronous data that the device can transmit or receive is stored in the 2-bit data rate capability (data rate capability) on the MSB side of the oMPR and the iMPR. A broadcast channel base( broadcast channel base) of the oMPR prescribes the channel number for use with the broadcast output (broadcast output).

The number of the output plugs of the device, i.e., the value indicative of the number of the oPCRs is stored in the number of the output plugs (number of output plugs) of 5 bits on the LSB side of the oMPR. The number of the input plugs of the device, i.e., the value indicative of the number of the iPCRs is stored in the number of the input plugs (number of input plugs) of 5 bits on the LSB side of the iMPR. A main extended field and an auxiliary extended field are the areas defined for future extension.

An on-line (on-line) on the MSB of the oPCR and the iPCR shows the state in which the plug is in use. Specifically, if its value is 1, then it is indicated that the plug is held at on-line. If its value is 0, then it is indicated that the plug is held at off-line. A value of the broadcast connection counter (broadcast connection counter) of the oPCR and the iPCR expresses whether the broadcast connection exists (1) or not (0). A value that a point-to-point connection counter (point-to-point connection counter) having a 6-bit width of the oPCR and the iPCR has expresses the number of point-to-point connection (point-to-point connection) of the plug. The point-to-point connection (so-called p-to-p connection) is a connection used to transmit data among one specified node and other specified nodes.

A value of channel number (channel number) having a 6-bit width of the oPCR and the iPCR expresses the isochronous channel number to which the plug is connected. A value of a data rate (data rate) having a 2-bit width of the oPCR expresses a real transmission speed of packets of the isochronous data outputted from the plug. A code stored in an overhead ID (overhead ID) having a 4-bit width of the oPCR expresses a bandwidth of the overhead of the isochronous communication. A value of a payload (payload) having a 10-bit width of the oPCR expresses a maximum value of data contained in the isochronous packets that the plug can handle.

FIG. 40 is a diagram showing a relationship among the plug, the plug control register and the isochronous channel. Devices connected to the IEEE 1394 system bus are herein shown as AV devices (AV device) 71 to 73. Isochronous data whose channel was designated by the oPCR [1] of the oPCR [0] to the oPCR [2] in which the transmission speed and the number of the oPCRs are prescribed by the oMPR of the AV device 73 is transmitted to the channel #1 of the IEEE 1394 serial bus. Based on the transmission speed of the inputted channel #1 and the iPCR [0] and the iPCR [1] in which the transmission speed and the number of the iPCRs are prescribed by the iMPR of the AV device 71, the AV device 71 reads the isochronous data transmitted to the channel #1 of the IEEE 1394 serial bus. In a like manner, the AV device 72 transmits isochronous data to the channel #2 designated by the oPCR [0], and the AV device 71 reads the isochronous data from the channel #2 designated by the iPCR [1].

In this manner, data is transmitted among the devices connected by the IEEE 1394 serial bus. The system according to this embodiment is able to control respective devices and judge the states by using the AV/C command set prescribed as commands for controlling the devices connected through the IEEE 1394 serial bus. Next, the AV/C command set will be described.

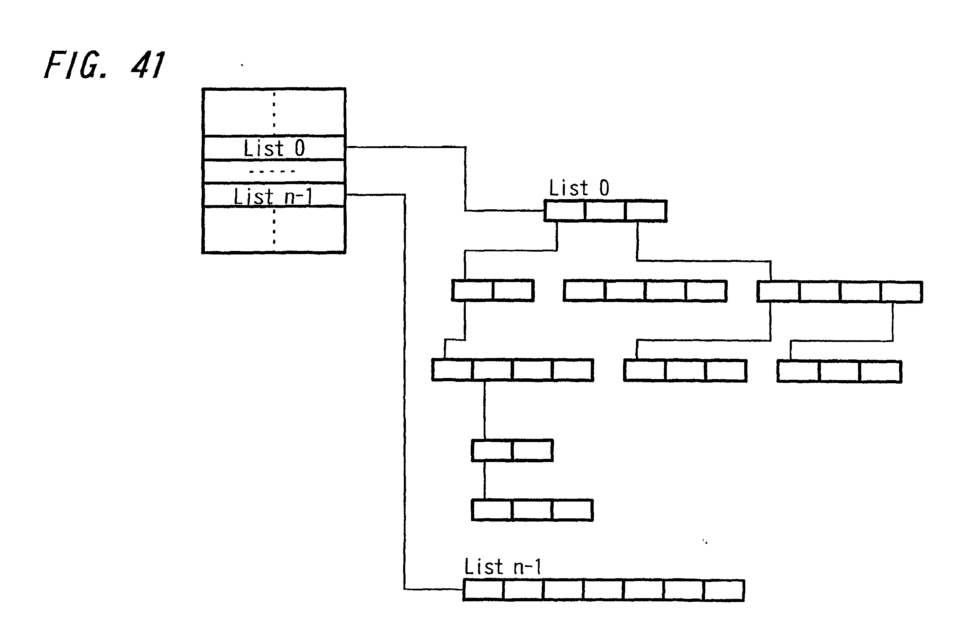

First, a data structure of a subunit identifier descriptor (Subunit Identifier Descriptor) in the AV/C command set used by the system according to this embodiment will be described with reference to FIGS. 41 to 44. FIG. 41 shows the data structure of the subunit identifier descriptor. As shown in FIG. 41, data is formed by lists of a hierarchical structure of the subunit identifier descriptor. A list expresses a receivable channel if it is a tuner and expresses a recorded number if it is a disc. The list at the uppermost position of the hierarchical structure is called a root list, and a list 0 becomes a root for low-order lists. Other lists also become root lists. There exist root lists as many as the objects. The object expresses such channel in the digital broadcasting or the like if the AV device connected to the bus is the tuner. All lists in one hierarchy share common information.

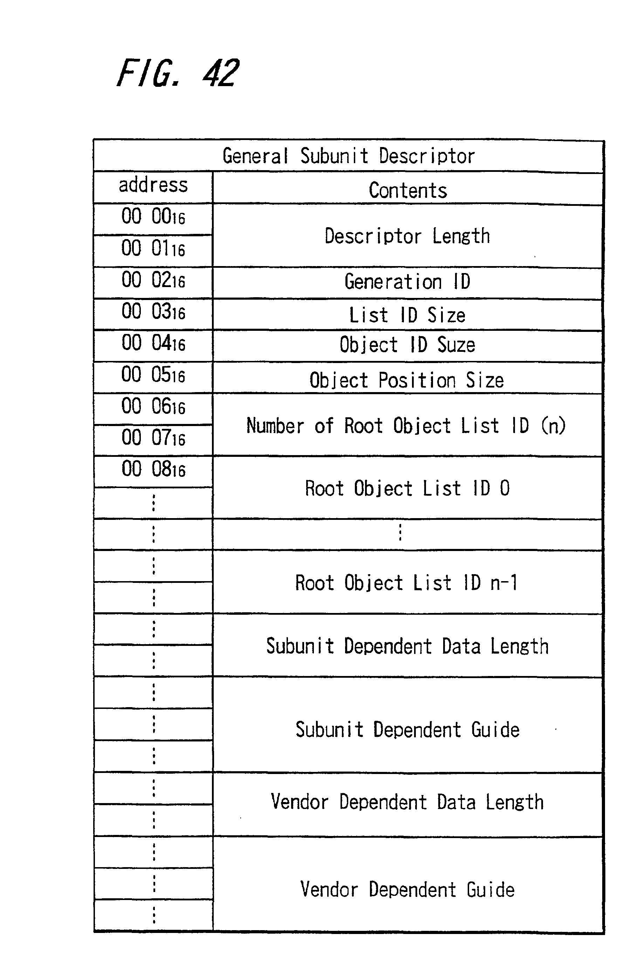

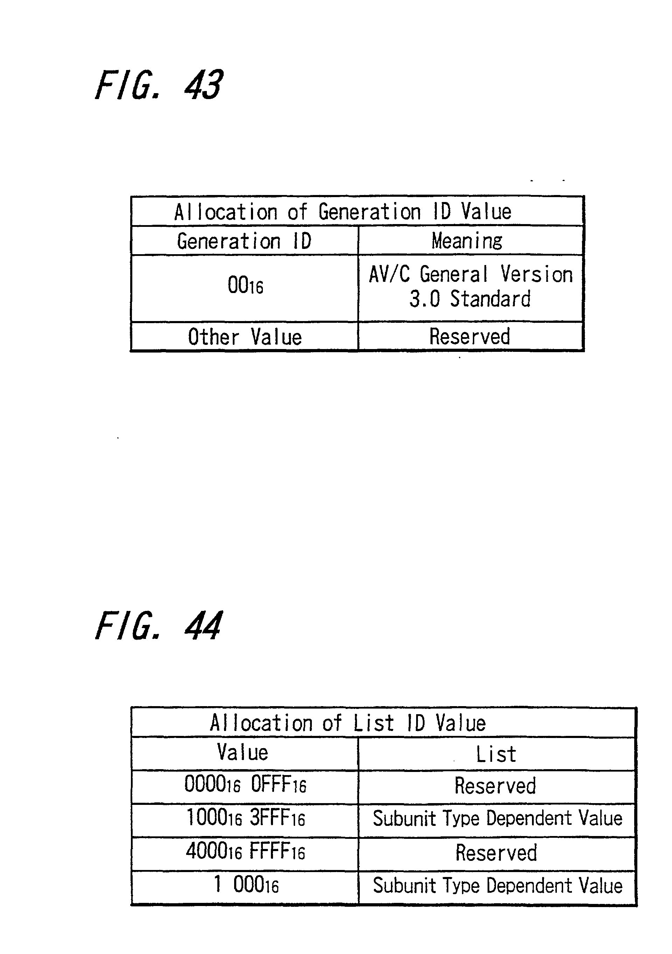

FIG. 42 shows a format of the general subunit descriptor (The General Subunit Identifier Descriptor). The subunit descriptor describes therein attribute information concerning functions as contents. A descriptor length (descriptor length) field does not contain a value of its own field. A generation ID (generation ID) indicates a version of the AV/C command set, and its value is "00h" (h expresses the hexadecimal notation), for example. Herein, "00h" means that the data structure and the command are based on the version 3.0 of the AV/C general specification (General Specification) as shown in FIG. 43, for example. As shown in FIG. 43, all values excepting "00h" are reserved for future specification.

A size of list ID (size of list ID) expresses the number of bytes of the list ID. A size of object ID (size of object ID) expresses the number of bytes of the object ID. A size of object position (size of object position) expresses the position (number of bytes) in the list which is looked up upon control. The number of root object list (number of root object list) expresses the number of the root object lists. A root object list ID (root object list id) shows an ID used to identify the highest-order root object list in the respective independent hierarchical layers.

A subunit dependent length (subunit dependent length) expresses the number of bytes of a following subunit dependent data field (subunit dependent information) field. The subunit dependent data field is the field indicating function dependent information. A manufacturer dependent data length (manufacturer dependent length) indicates the number of bytes of the following manufacturer dependent data (manufacturer dependent information) field. Manufacturer dependent data is a field indicating specification information of a vender (manufacturer). When the descriptor does not contain the manufacturer dependent data, this field does not exist.

FIG. 44 shows a range in which the list ID shown in FIG. 42 is allocated. As shown in FIG. 44, "000h" to "0FFh" and "4000h" to "FFFFh" are reserved as allocation ranges for future specification. "1000h to 3FFFh" and "10000h to maximum value of list ID" are prepared in order to identify dependent information of function types.

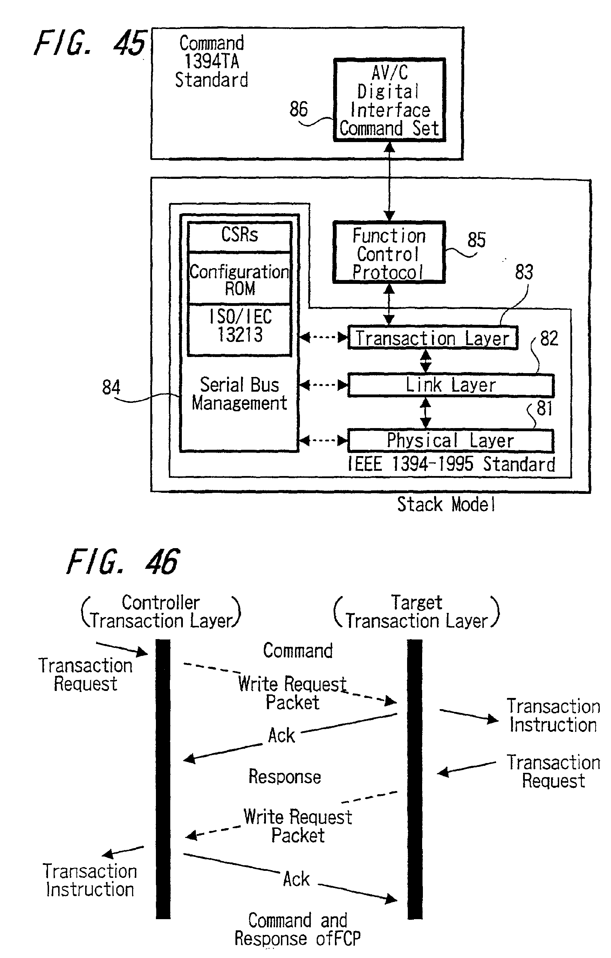

Next, the AV/C command set used in the system according to this embodiment will be described with reference to FIGS. 45 to 50. FIG. 45 shows a stack model of the AV/C command set. As shown in FIG. 45, a physical layer 81, a link layer 82, a transaction layer 83 and a serial bus management 84 are based on the IEEE 1394. An FCP (Function Control Protocol) 85 is based on the IEC 61883. An AV/C command set 86 is based on the 1394 TA specification.

FIG. 46 is a diagram used to explain commands and responses of the FCP 85 shown in FIG. 45. The FCP is the protocol used to control devices (nodes) on the IEEE 1394 system bus. As shown in FIG. 46, a control side assumes a controller and a controller side assumes a target. The transmission or the response of the command in the FCP is executed between the nodes by using a write transaction of the asynchronous communication of the IEEE 1394 asynchronous communication. The target which has received data returns acknowledge to the controller in order to confirm the reception.

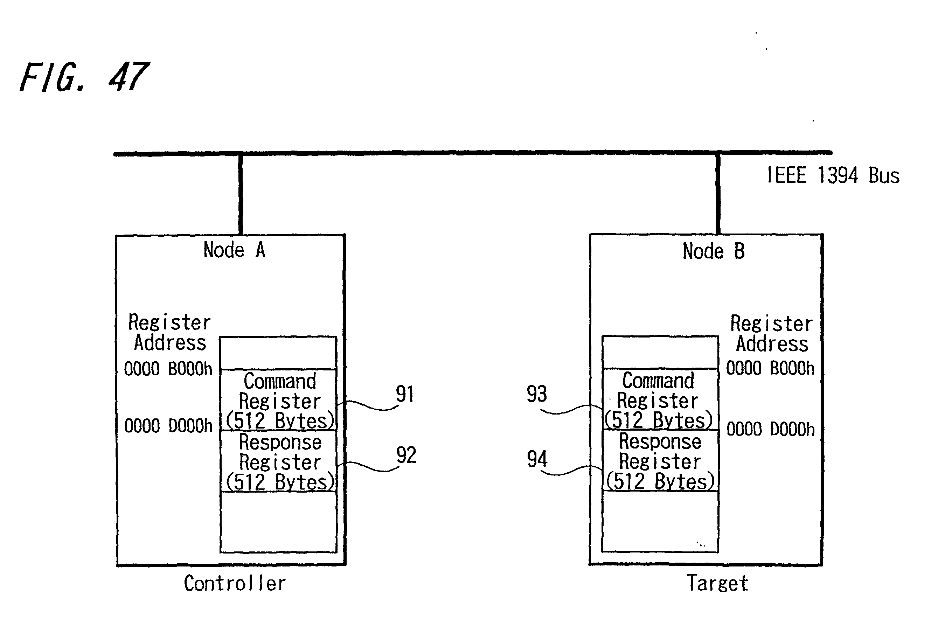

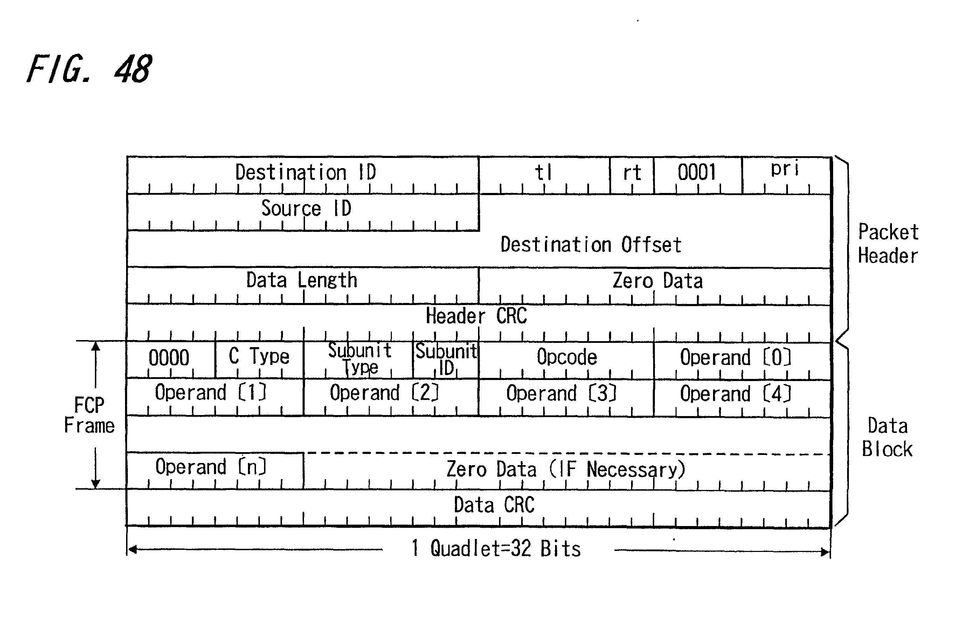

FIG. 47 is a diagram to which reference will be made in explaining the relationship between the command and the response in the FCP shown in FIG. 46 more in detail. Nodes A and B are connected together via the IEEE 1394 bus. The node A is the controller and the node B is the target. Both of the nodes A and B include 512-byte command register and response register. As shown in FIG. 47, the controller transmits a command by writing a command message in a command register 93 of the target. Conversely, the target transmits a response by writing a response message in a response register 92 of the controller. Control information is transmitted and received for the above two messages. The types of the command set transmitted by the FCP are written in a CTS in the data field of FIG. 48 which will be described later on.

FIG, 48 shows a data structure of packets transmitted in the asynchronous transfer mode of the AV/C command. The AV/C command set is the command set used to control the AV devices, and CTS (command set ID) = "0000". An AV/C command frame and a response frame are transmitted and received between the nodes by using the above FCP. In order to prevent a load from being imposed upon the bus and the AV devices, the response for the command should be transmitted within a time period of 100 ms. As shown in FIG. 48, data of asynchronous packet is comprised of 32 bits (= 1 quadlet) in the horizontal direction. In the sheet of drawing, the upper stage shows a packet header portion and the lower stage in the sheet of drawing shows a data block. A destination (destination ID) shows a destination.

The CTS shows a command set ID and CTS = "0000" in the AV/C command set. A Ctype/response (ctype/response) field shows a command function type when the packet is the command, and shows a processed result of command when the packet is the response. Roughly classified, there are defined four types of commands wherein (1) a command (CONTROL) for controlling the functions from the outside, (2)
a command (STATUS) for inquiring the status from the outside, (3) a command for inquiring the existence of the support of the control command from the outside (GENERAL INQUIRY (existence of support of op code) and SPECIFIC INQUIRY (existence of support of op code and operands)) and (4) a command (NOTIFY) for notifying the change of the status to the outside.

Response messages are returned in response to the type of the command. Response messages for the control (CONTROL) command are "not implemented" (NOT IMPLEMENTED), "accepted" (ACCEPTED), "rejected" (REJECTED) and "interim" (INTERIM). Response messages for the status (STATUS) command are "not implemented" (NOT IMPLEMENTED), "rejected" (REJECTED), "in transition" (IN TRANSITION) and "stable" (STABLE). Response messages for the command (GENERAL INQUIRY and SPECIFIC INQUIRY) for inquiring the existence of the support of the command from the outside are "implemented" (IMPLEMENTED) and "not implemented" (NOT IMPLEMENTED). Response messages for the command (NOTIFY) to notify the change of the status to the outside are "not implemented" (NOT IMPLEMENTED), "rejected" (REJECTED), "interim" (INTERIM) and "changed" (CHANGED).

The subunit type (subunit type) is provided in order to specify functions within the device. For example, a tape recorder/player (tape recorder/player), a tuner (tuner) and so on are allocated to the subunit type. In addition to the functions corresponding to the devices, the subunit type is also allocated to the BBS (bulletin board subunit) which opens information to other devices. In order to discriminate a plurality of subunits of the same type, the addressing is executed by using the subunit ID (subunit ID) as a discrimination number. An op code (opcode) which is an operation code expresses a command, and an operand (operand) expresses a parameter of a command. There are prepared fields (dditional operands) which should be added, if necessary. Zero data and the like are added to the operand, if necessary. A data CRC (Cyclic Reduncy Check) is used to check errors when data is transmitted.

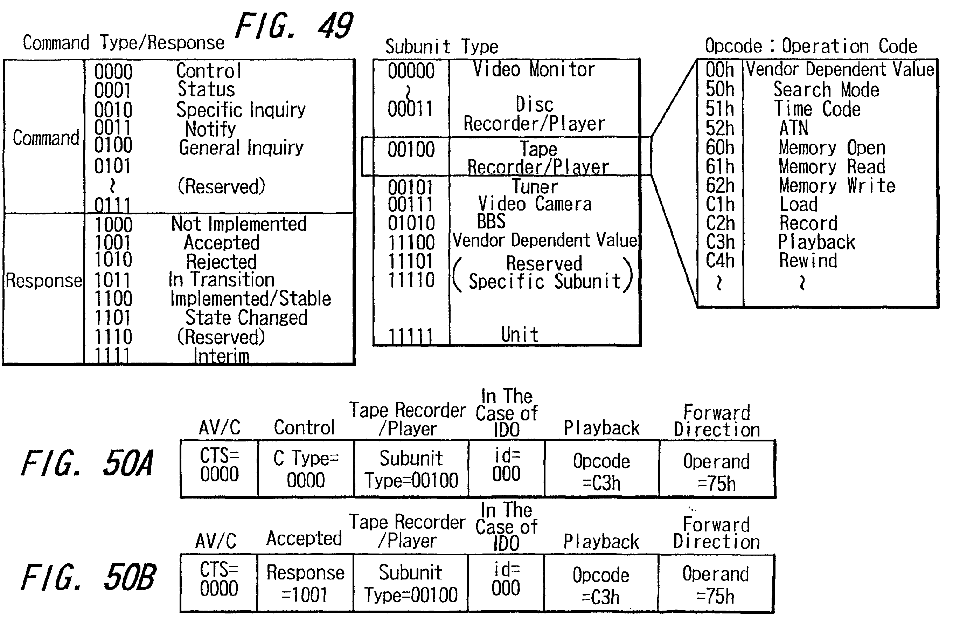

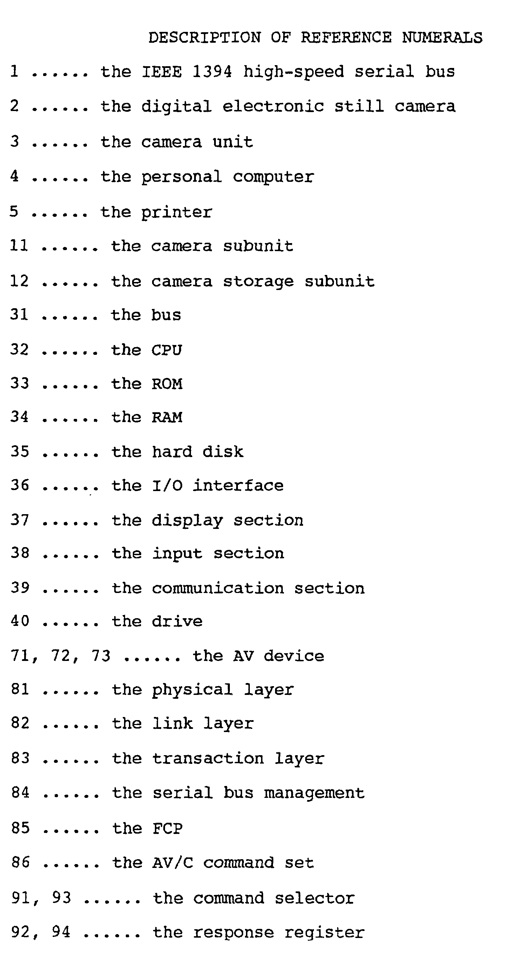

FIG. 49 shows concrete examples of the AV/C command. The left-hand side in FIG. 49 shows concrete examples of the command type/response. The upper stage in the sheet of drawing expresses commands, and the lower state in the sheet of drawing expresses responses. Control (CONTROL) is allocated to "0000", status (STATUS) is allocated to "0001", specific inquiry (SPECIFIC INQUIRY) is allocated to "0010", notify (NOTIFY) is allocated to "0011", and general inquiry (GENERAL INQUIRY) is allocated to "0100". "0101" to "0111" are reserved for future specification. Not implemented (NOT IMPLEMENTED) is allocated to "1000", accepted (ACCEPTED) is allocated to "1001", rejected (REJECTED) is allocated to "1010", in transition (IN TRANSITION) is allocated to "1011", implemented (IMPLEMENTED/STABLE) is allocated to "1100", changed (CHANGED) is allocated to "1101" and interim (INTERIM) is allocated to "1111". "1110" is reserved for future specification.

The center in FIG. 49 shows concrete examples of subunit types. A video monitor is allocated to "00000", a disc recorder/ player is allocated to "00011", a tape recorder/player is allocated to "00100", a tuner is allocated to "00101", a video camera is allocated to "00111", a subunit for use as a bulletin board and which might be called a BBS (Bulletin Board Subunit) is allocated to "01010", a vender unique subunit type (Vender unique) is allocated to "11100" and a specific subunit type (Subunit type extended tonext byte) is allocated to "11110". While a unit is allocated to "11111", this is used when it is transmitted to the device itself and might be the on-off of the power supply, for example.

The right-hand side of FIG. 49 shows concrete examples of op code (operation code: opcode). A table of op codes exists at every subunit type. There are shown op codes obtained when the subunit type is the tape recorder/player. Herein, operands are defined for every op code. A vender dependent value (Vender dependent) is allocated to "00h", a search mode is allocated to "50h",a time code is allocated to "51h", an ATN is allocated to "52h", an open memory is allocated to "60h", a memory read is allocated to "61h", a memory write is allocated to "62h", a load is allocated to "C1h", a recording is allocated to "C2h", a playback is allocated to "C3h" and a rewinding is allocated to "C4h".

FIG. 50 shows concrete examples of the AV/C command and response. For example, when a user instructs a playback to a reproducing device serving as a target (consumer), the controller transmits the command shown in FIG. 50A to the target. Since this command uses the AV/C command set, CTS = "0000" is established. Since the ctype (command type) uses the command (CONTROL) for controlling the device from the outside, c type = "0000" is established (see FIG. 49). Since the subunit type is the tape recorder/player, the subunit type = "00100" is established (see FIG. 49). The identification code id shows the case of ID0 and hence id = 000 is established. The op code is allocated to "C3h" which means the playback (see FIG. 49). The operand is allocated to "75h" which means the forward direction (FORWARD). When data is reproduced, the target transmits the response shown in FIG. 50B to the controller. Since "ACCEPTED" (accepted) enters the response, response = "1001" is established (see FIG. 49). Portions other than the response are the same as those of FIG. 50A and therefore need not be described. The above transmission processing is executed through the IEEE 1394 high-speed serial bus 1 that have been described so far in the above first and second embodiments. While this transmission processing arrangement is being applied, the information processing among the devices that have been described so far in the above first and second embodiments is executed.

Although a series of the above-mentioned processing can be executed by hardware, it can be executed by software. When a series of processing is executed by software, programs comprising such software can be installed on a computer assembled in the camera storage subunit 12 serving as exclusive-hardware or the general-purpose personal computer 4 that may become able to execute a variety of functions by installing various kinds of programs thereon.

A medium used to install programs executing a series of processings on a computer so that the programs can be executed by a computer will be described with reference to the case in which such computer is a general-purpose personal computer. Programs can be supplied to a user under the condition that the programs were previously installed on a hard disk drive or a semiconductor memory serving as a recording medium incorporated within the personal computer.

Alternatively, programs can be temporarily or permanently stored in a recording medium such as a floppy disk, a CD-ROM (Compact Disk-Read Only Memory), a magneto-optical (Magneto-Optical) disk, a DVD (Digital Versatile Disk), a magnetic disc or a semiconductor memory card, and can be supplied to users as package software.

Further, programs can be transferred from a predetermined download site through a communication line such as a digital satellite broadcasting to the personal computer or can be transferred to the personal computer via cables through a network such as a local area network or an internet and thereby stored in the hard disk or the like incorporated within the personal computer.

Mediums in this specification may mean a wide-sense concept including all these mediums.

Incidentally, in this specification, the steps which describe the program supplied by the medium may include not only processing executed in a time series fashion along the described order but also processing which may not always be executed in a time series fashion and which may be executed parallelly or individually.

While it is determined by the recording and reproducing apparatus side connected to the computer apparatus serving as the information processing apparatus through the bus whether or not the recording media has been changed, the recording and reproducing apparatus side informs of the information processing apparatus the judged result and it is determined by the information processing apparatus based on the data of the response whether or not the recording media has been changed in the first and second embodiments, the present invention is not limited thereto, and IDs necessary for the judgment may be transmitted from the recording and reproducing apparatus to the information processing apparatus and it may be determined by comparing IDs of the recording media within the information processing apparatus whether or not the recording media has been changed.

## Claims

1. In an information processing method in which information obtained from a recording and reproducing apparatus on which a predetermined recording media can be loaded is managed by a predetermined control device connected through a predetermined digital interface, said information processing method comprising the steps of providing
a media identification number and
determining that a recording media has been changed if a media identification number designated by said control device and a media identification number managed by a recording and reproducing apparatus for said recording media do not agree with each other.

2. In an information processing method according to claim 1,
said information processing method **characterized in that**
it is determined by said recording and reproducing apparatus whether or not a media identification number set on said control device and a media identification number counted by said recording and reproducing apparatus agree with each other and informs of said control device the fact that the recording media has been changed.

3. In an information processing method for supplying a file recorded on a predetermined recording media to a control device connected through a predetermined digital interface,
said information processing method **characterized in that**
the identification number of the file recorded on said recording media is generated by said recording media recording and reproducing apparatus and said identification number is informed to said control device so that said control device recognizes the file.

4. In an information processing method according to claim 3,
said information processing method **characterized in that**
the file recorded on said recording media is managed by a plurality of tree structured hierarchical layers,
said management device obtains the number of information at every layer of said information and guide information on each information in order to retrieve or access said managed information without following said tree structure,
a file at a low-order layer is judged based on the guide information thus obtained and information of said file is obtained by a command which designates the guide information thus obtained.

5. In an information processing method according to claim 4,
said information processing method **characterized in that**
said file at said low-order layer can be judged from a directory by matching a file name of a file at said low-order layer and a directory name at a high-order layer of said file.

6. In an information processing method according to claim 4,
said information processing method **characterized in that** when information can be read out from the high-order layer, predetermined information can be read out from a low-order layer connected to said information based on a predetermined command and a closing processing is executed in such a manner that information is inhibited from being read out from said high-order layer.

7. In an information processing apparatus for managing information concerning a recording media loaded on a recording and reproducing apparatus connected through a predetermined digital interface,
said information processing apparatus characterized by
media identification number setting means for managing said recording media and
control means for recognizing, based on results obtained when a media identification number set by said media identification number setting means and a media identification number set to said recording and reproducing apparatus are compared with each other, that a recording media has been changed.

8. In an information processing apparatus according to claim 7,
said information processing apparatus **characterized in that**
said recording and reproducing apparatus is made to compare media identification numbers under control of said control means and informs compared results to said information processing apparatus.

9. In an information processing apparatus for managing information on a file recorded on a recording media loaded on a recording and reproducing Apparatus Connected Through A Predetermined Digital Interface,
Said Information Processing Apparatus Characterized By
identification number acquiring means for acquiring an identification number of a file recorded on said recording media and
control means for recognizing the file recorded on said recording media based on the identification number acquired by said identification number acquiring means.

10. In an information processing apparatus according to claim 9,
said information processing apparatus characterized by a plurality of tree structured layers for managing files recorded on said recording media,
first information acquiring means for acquiring the number of information at every layer and guide information of each information and
second information acquiring means for judging a file of a low-order layer based on guide information acquired by said first information acquiring means and acquiring information of a corresponding file from said managed information by a predetermined command when said judged file is designated.

11. In an information processing apparatus according to claim 10,
said information processing apparatus **characterized in that**
said first information acquiring means judges a file of a low-order layer based on a directory at a high-order layer of said file.

12. In an information processing apparatus according to claim 10,
said information processing apparatus **characterized in that** when information at a high-order layer can be read out,
said first information acquiring means supplies a predetermined command to said information processing apparatus so that predetermined information can be read out from a low-order layer connected to said information and a closing processing is executed in such a manner that information is inhibited from being read out from said high-order layer.

13. In a medium in which there is stored a program for managing information obtained from a recording and reproducing apparatus on which a predetermined recording media can be loaded,
said medium enables an information processing apparatus to execute
a program comprising the steps of:
a step of setting a media identification number for managing said recording media;
a step of determining whether or not a set media identification number and a media identification number obtained from said recording and reproducing apparatus agree with each other; and
a step of determining that a recording media has been changed if it is determined based on said judged result that said media identification numbers do not agree with each other.
